# EUROPEAN PATENT APPLICATION

(11) **EP 4 563 601 A1**
(43) Date of publication of application: **04.06.2025**
(21) Application number: 23846646.0
(22) Date of filing: 27.07.2023
(51) Int. Cl.: C08F 14/26, C08F 6/14

(54) **POWDER CONTAINING PARTICLES OF LOW-MOLECULAR-WEIGHT POLYTETRAFLUOROETHYLENE AND A METHOD FOR PRODUCING SAME**

(30) Priority: 27.07.2022 JP 2022119936
(71) Applicant: DAIKIN INDUSTRIES, LTD., Osaka-shi, Osaka 530-0001 (JP)
(72) Inventor: YOSHIDA, Hirotoshi, Osaka-Shi, Osaka 530-0001 (JP); YAMABE, Takuya, Osaka-Shi, Osaka 530-0001 (JP); YAMAZAKI, Ranna, Osaka-Shi, Osaka 530-0001 (JP); TSUJI, Masayuki, Osaka-Shi, Osaka 530-0001 (JP); IGUCHI, Chisato, Osaka-Shi, Osaka 530-0001 (JP); KUBOUCHI, Masaki, Osaka-Shi, Osaka 530-0001 (JP); MASUDA, Eiji, Osaka-Shi, Osaka 530-0001 (JP); YAMAMOTO, Emi, Osaka-Shi, Osaka 530-0001 (JP); KATO, Taketo, Osaka-Shi, Osaka 530-0001 (JP); KAWAHARA, Kazuya, Osaka-Shi, Osaka 530-0001 (JP); NAKATANI, Yasukazu, Osaka-Shi, Osaka 530-0001 (JP); YAMANAKA, Taku, Osaka-Shi, Osaka 530-0001 (JP)
(74) Representative: Hoffmann Eitle
(86) International application number: PCT/JP2023/027658
(87) International publication number: WO 2024/024916

(57) **Abstract**

Provided is a powder containing particles of low molecular weight polytetrafluoroethylene, wherein the powder contains a fluorine-containing compound having a hydrophilic group, and the content of the fluorine-containing compound having a hydrophilic group is 250 ppb by mass or less based on the powder, and wherein the powder has a specific surface area of 7 to 50 m²/g.

## Description

### TECHNICAL FIELD

The present disclosure relates to a powder containing particles of low molecular weight polytetrafluoroethylene and a method for producing the same.

### BACKGROUND ART

Patent Document 1 discloses a polytetrafluoroethylene micropowder containing up to about 3% by weight of a monomer copolymerizable with tetrafluoroethylene, wherein the polytetrafluoroethylene micropowder has a polydispersity Mw/Mn of 1.5 to 2.5, a specific surface area (BET) of 7 to 13 m²/g, and a primary particle size of 150 to 250 nm.

Patent Document 2 discloses a low molecular weight polytetrafluoroethylene granulated powder obtained by a granulation process from low molecular weight polytetrafluoroethylene particles composed of low molecular weight polytetrafluoroethylene having a number-average molecular weight of 600,000 or less.

Patent Document 3 discloses a polytetrafluoroethylene powder having a number average molecular weight of 40,000 to 600,000, a specific surface area of 7 to 20 m2/g, an average particle size of 1 to 30 µm, and a water contact angle of 110 to 125°.

Patent Document 4 discloses a powder of low molecular weight polytetrafluoroethylene containing tetrafluoroethylene unit, or tetrafluoroethylene unit and a modifying-monomer unit copolymerizable with tetrafluoroethylene unit, wherein the powder contains a fluorine-containing compound represented by the following general formula (1) in a content of 100 ppm or less based on the powder of low molecular weight polytetrafluoroethylene:
General formula (1)

   X-(CF₂)ₘ-Y (1)

   (wherein X represents H or F; m represents an integer of 3 to 5; and Y represents -SO₃M, -SO₄M, -SO₃R, -SO₄R, -COOM, -PO₃M₂, or -PO₄M₂, wherein M represents H, NH₄, or an alkali metal, and R represents an alkyl group having 1 to 12 carbon atoms), and does not contain a fluorine-containing compound represented by the following general formula (3):
General formula (3)

   X-(CF₂)ₘ-Y (3)

   (wherein X represents H or F; m represents an integer of 6 or more; and Y represents -SO₃M, -SO₄M, -SO₃R, -SO₄R, -COOM, -PO₃M₂, or -PO₄M₂, wherein M represents H, NH₄, or an alkali metal, and R represents an alkyl group having 1 to 12 carbon atoms.).

### RELATED ART

### PATENT DOCUMENTS

Patent Document 1: Japanese Patent Laid-Open No. 07-165828
Patent Document 2: Japanese Patent Laid-Open No. 2005-2322
Patent Document 3: Japanese Patent Laid-Open No. 10-147617
Patent Document 4: International Publication No. WO 2009/020187

### SUMMARY OF THE INVENTION

### PROBLEM TO BE SOLVED BY THE INVENTION

An object of the present disclosure is to provide a powder containing particles of a low molecular weight polytetrafluoroethylene, having excellent fine dispersibility in other materials, and having a reduced content of a fluorine-containing compound having a hydrophilic group.

Another object of the present disclosure is to provide a method for producing a powder containing particles of a low molecular weight polytetrafluoroethylene, having excellent fine dispersibility in other materials, and having a reduced content of a fluorine-containing compound having a hydrophilic group.

### MEANS FOR SOLVING THE PROBLEM

The present disclosure provides a powder containing particles of low molecular weight polytetrafluoroethylene, wherein the powder contains a fluorine-containing compound having a hydrophilic group, and the content of the fluorine-containing compound having a hydrophilic group is 250 ppb by mass or less based on the powder, and wherein the powder has a specific surface area of 7 to 50 m²/g.

### EFFECTS OF INVENTION

The present disclosure can provide a powder containing particles of a low molecular weight polytetrafluoroethylene, having excellent fine dispersibility in other materials, and having a reduced content of a fluorine-containing compound having a hydrophilic group.

Also, the present disclosure can provide a method for producing a powder containing particles of a low molecular weight polytetrafluoroethylene, having excellent fine dispersibility in other materials, and having a reduced content of a fluorine-containing compound having a hydrophilic group.

### DESCRIPTION OF EMBODIMENTS

Before describing the present disclosure in detail, some terms used in the present disclosure will now be defined or described.

The melt-fabricable as used herein means that a polymer has an ability to be processed in a molten state using a conventional processing device such as an extruder or an injection molding machine. Accordingly, a melt-fabricable fluororesin usually has a melt flow rate of 0.01 to 500 g/10 min as measured by the measurement method described below.

Polytetrafluoroethylene (PTFE) as used herein is preferably a fluoropolymer having a tetrafluoroethylene unit content of 99 mol% or more based on all polymerization units.

The content of each of the monomers constituting the fluoropolymer can be calculated herein by any appropriate combination of NMR, FT-IR, elemental analysis, X-ray fluorescence analysis in accordance with the type of monomer.

The "organic group" as used herein means a group containing one or more carbon atoms or a group formed by removing one hydrogen atom from an organic compound.

Examples of the "organic group" include:
an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents,
a heteroaryl group optionally having one or more substituents, a cyano group,
a formyl group,
RaO-,
RaCO-,
RaSO₂-,
RaCOO-,
RaNRaCO-,
RaCONRa-,
RaOCO-,
RaOSO₂-, and
RaNRbSO₂-
wherein each Ra is independently
an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents, or
a heteroaryl group optionally having one or more substituents; and
Rb is independently H or an alkyl group optionally having one or more substituents.

The organic group is preferably an alkyl group optionally having one or more substituents.

The "substituent" as used herein means a group capable of replacing another atom or group. Examples of the "substituent" include an aliphatic group, an aromatic group, a heterocyclic group, an acyl group, an acyloxy group, an acylamino group, an aliphatic oxy group, an aromatic oxy group, a heterocyclic oxy group, an aliphatic oxycarbonyl group, an aromatic oxycarbonyl group, a heterocyclic oxycarbonyl group, a carbamoyl group, an aliphatic sulfonyl group, an aromatic sulfonyl group, a heterocyclic sulfonyl group, an aliphatic sulfonyloxy group, an aromatic sulfonyloxy group, a heterocyclic sulfonyloxy group, a sulfamoyl group, an aliphatic sulfonamide group, an aromatic sulfonamide group, a heterocyclic sulfonamide group, an amino group, an aliphatic amino group, an aromatic amino group, a heterocyclic amino group, an aliphatic oxycarbonylamino group, an aromatic oxycarbonylamino group, a heterocyclic oxycarbonylamino group, an aliphatic sulfinyl group, an aromatic sulfinyl group, an aliphatic thio group, an aromatic thio group, a hydroxy group, a cyano group, a sulfo group, a carboxy group, an aliphatic oxyamino group, an aromatic oxy amino group, a carbamoylamino group, a sulfamoylamino group, a halogen atom, a sulfamoylcarbamoyl group, a carbamoyl sulfamoyl group, a dialiphatic oxyphosphinyl group, and a diaromatic oxyphosphinyl group.

The aliphatic group may be saturated or unsaturated, and may have a hydroxyl group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic group include alkyl groups having 1 to 8 and preferably 1 to 4 carbon atoms in total, such as a methyl group, an ethyl group, a vinyl group, a cyclohexyl group, and a carbamoylmethyl group.

The aromatic group may have, for example, a nitro group, a halogen atom, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic group include aryl groups having 6 to 12 carbon atoms and preferably 6 to 10 carbon atoms in total, such as a phenyl group, a 4-nitrophenyl group, a 4-acetylaminophenyl group, and a 4-methanesulfonylphenyl group.

The heterocyclic group may have a halogen atom, a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the heterocyclic group include 5- or 6-membered heterocyclic groups having 2 to 12 and preferably 2 to 10 carbon atoms in total, such as a 2-tetrahydrofuryl group and a 2-pyrimidyl group.

The acyl group may have an aliphatic carbonyl group, an arylcarbonyl group, a heterocyclic carbonyl group, a hydroxy group, a halogen atom, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the acyl group include acyl groups having 2 to 8 and preferably 2 to 4 carbon atoms in total, such as an acetyl group, a propanoyl group, a benzoyl group, and a 3-pyridinecarbonyl group.

The acylamino group may have an aliphatic group, an aromatic group, a heterocyclic group, or the like, and may have, for example, an acetylamino group, a benzoylamino group, a 2-pyridinecarbonylamino group, a propanoylamino group, or the like. Examples of the acylamino group include acylamino groups having 2 to 12 and preferably 2 to 8 carbon atoms in total and alkylcarbonylamino groups having 2 to 8 carbon atoms in total, such as an acetylamino group, a benzoylamino group, a 2-pyridinecarbonylamino group, and a propanoylamino group.

The aliphatic oxycarbonyl group may be saturated or unsaturated, and may have a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic oxycarbonyl group include alkoxycarbonyl groups having 2 to 8 and preferably 2 to 4 carbon atoms in total, such as a methoxycarbonyl group, an ethoxycarbonyl group, and a (t)-butoxycarbonyl group.

The carbamoyl group may have an aliphatic group, an aromatic group, a heterocyclic group, or the like. Examples of the carbamoyl group include an unsubstituted carbamoyl group and alkylcarbamoyl groups having 2 to 9 carbon atoms in total, and preferably an unsubstituted carbamoyl group and alkylcarbamoyl groups having 2 to 5 carbon atoms in total, such as a N-methylcarbamoyl group, a N,N-dimethylcarbamoyl group, and a N-phenylcarbamoyl group.

The aliphatic sulfonyl group may be saturated or unsaturated, and may have a hydroxy group, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic sulfonyl group include alkylsulfonyl groups having 1 to 6 carbon atoms in total and preferably 1 to 4 carbon atoms in total, such as a methanesulfonyl group.

The aromatic sulfonyl group may have a hydroxy group, an aliphatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic sulfonyl group include arylsulfonyl groups having 6 to 10 carbon atoms in total, such as a benzenesulfonyl group.

The amino group may have an aliphatic group, an aromatic group, a heterocyclic group, or the like.

The acylamino group may have, for example, an acetylamino group, a benzoylamino group, a 2-pyridinecarbonylamino group, a propanoylamino group, or the like. Examples of the acylamino group include acylamino groups having 2 to 12 carbon atoms in total and preferably 2 to 8 carbon atoms in total, and more preferably alkylcarbonylamino groups having 2 to 8 carbon atoms in total, such as an acetylamino group, a benzoylamino group, a 2-pyridinecarbonylamino group, and a propanoylamino group.

The aliphatic sulfonamide group, the aromatic sulfonamide group, and the heterocyclic sulfonamide group may be, for example, a methanesulfonamide group, a benzenesulfonamide group, and a 2-pyridinesulfonamide group, respectively.

The sulfamoyl group may have an aliphatic group, an aromatic group, a heterocyclic group, or the like. Examples of the sulfamoyl group include a sulfamoyl group, alkylsulfamoyl groups having 1 to 9 carbon atoms in total, dialkylsulfamoyl groups having 2 to 10 carbon atoms in total, arylsulfamoyl groups having 7 to 13 carbon atoms in total, and heterocyclic sulfamoyl groups having 2 to 12 carbon atoms in total, more preferably a sulfamoyl group, alkylsulfamoyl groups having 1 to 7 carbon atoms in total, dialkylsulfamoyl groups having 3 to 6 carbon atoms in total, arylsulfamoyl groups having 6 to 11 carbon atoms in total, and heterocyclic sulfamoyl groups having 2 to 10 carbon atoms in total, such as a sulfamoyl group, a methylsulfamoyl group, a N,N-dimethylsulfamoyl group, a phenylsulfamoyl group, and a 4-pyridinesulfamoyl group.

The aliphatic oxy group may be saturated or unsaturated, and may have a methoxy group, an ethoxy group, an i-propyloxy group, a cyclohexyloxy group, a methoxyethoxy group, or the like. Examples of the aliphatic oxy group include alkoxy groups having 1 to 8 and preferably 1 to 6 carbon atoms in total, such as a methoxy group, an ethoxy group, an i-propyloxy group, a cyclohexyloxy group, and a methoxyethoxy group.

The aromatic amino group and the heterocyclic amino group may have an aliphatic group, an aliphatic oxy group, a halogen atom, a carbamoyl group, a heterocyclic group having a ring-fused with the aryl group, or an aliphatic oxycarbonyl group, and preferably an aliphatic group having 1 to 4 carbon atoms in total, an aliphatic oxy group having 1 to 4 carbon atoms in total, a halogen atom, a carbamoyl group having 1 to 4 carbon atoms in total, a nitro group, or an aliphatic oxycarbonyl group having 2 to 4 carbon atoms in total.

The aliphatic thio group may be saturated or unsaturated, and examples include alkylthio groups having 1 to 8 carbon atoms in total and more preferably 1 to 6 carbon atoms in total, such as a methylthio group, an ethylthio group, a carbamoylmethylthio group, and a t-butylthio group.

The carbamoylamino group may have an aliphatic group, an aryl group, a heterocyclic group, or the like. Examples of the carbamoylamino group include a carbamoylamino group, alkylcarbamoylamino groups having 2 to 9 carbon atoms in total, dialkylcarbamoylamino groups having 3 to 10 carbon atoms in total, arylcarbamoylamino groups having 7 to 13 carbon atoms in total, and heterocyclic carbamoylamino groups having 3 to 12 carbon atoms in total, and preferably a carbamoylamino group, alkylcarbamoylamino groups having 2 to 7 carbon atoms in total, dialkylcarbamoylamino groups having 3 to 6 carbon atoms in total, arylcarbamoylamino groups having 7 to 11 carbon atoms in total, and heterocyclic carbamoylamino groups having 3 to 10 carbon atoms in total, such as a carbamoylamino group, a methylcarbamoylamino group, a N,N-dimethylcarbamoylamino group, a phenylcarbamoylamino group, and a 4-pyridinecarbamoylamino group.

A range indicated by endpoints as used herein includes all numerical values within the range (for example, the range of 1 to 10 includes 1.4, 1.9, 2.33, 5.75, 9.98, and the like).

The phrase "at least one" as used herein includes all numerical values equal to or greater than 1 (for example, at least 2, at least 4, at least 6, at least 8, at least 10, at least 25, at least 50, at least 100, and the like).

Hereinafter, specific embodiments of the present disclosure will now be described in detail, but the present disclosure is not limited to the following embodiments.

The present disclosure relates to a powder containing a low molecular weight polytetrafluoroethylene. The powder of the present disclosure is a powder containing particles of the low molecular weight polytetrafluoroethylene, wherein the powder contains a fluorine-containing compound having a hydrophilic group, and the content of the fluorine-containing compound having a hydrophilic group is 250 ppb by mass or less based on the powder, and wherein the powder has a specific surface area of 7 to 50 m²/g.

A known method for producing a low molecular weight polytetrafluoroethylene is, as described in Patent Document 4, a production method comprising carrying out emulsion polymerization of tetrafluoroethylene, or tetrafluoroethylene and a modifying monomer copolymerizable with tetrafluoroethylene, in an aqueous medium in the presence of a chain transfer agent, wherein the emulsion polymerization is carried out in the presence of a fluorine-containing compound represented by the following general formula:

X-(CF₂)ₘ-Y

wherein X represents H or F; m represents an integer of 3 to 5; and Y represents -SO₃M, -SO₄M, -SO₃R, -SO₄R, -COOM, -PO₃M₂, or -PO₄M₂, wherein M represents H, NH₄, or an alkali metal, and R represents an alkyl group having 1 to 12 carbon atoms. Also, as described in Patent Document 4, the powder of low molecular weight polytetrafluoroethylene can be produced by coagulating an aqueous dispersion of low molecular weight polytetrafluoroethylene obtained by emulsion polymerization, and drying the coagulate. The copolymer powder thus obtained contains a fluorine-containing compound used during polymerization.

While, according to Patent Document 4, it is easy to regulate the content of the fluorine-containing compound to 1 ppm or less by enhancing the removal efficiency in the washing and drying steps, there is a demand for a further reduction in the content of the fluorine-containing compound. Moreover, only the content of the fluorine-containing compound used during polymerization is described as being reduced in Patent Document 4, but it is preferable to also remove from the powder a fluorine-containing compound having a hydrophilic group produced by the polymerization of tetrafluoroethylene.

A known method for producing low molecular weight polytetrafluoroethylene is also a production method involving suspension polymerization as described in Patent Document 2. As described in Patent Document 2, when low molecular weight polytetrafluoroethylene is produced by suspension polymerization, the specific surface area of the powder containing particles of low molecular weight polytetrafluoroethylene is small.

While the powder of the present disclosure contains a fluorine-containing compound having a hydrophilic group, the content thereof is reduced to 250 ppb by mass or less based on the powder. Accordingly, for example, when the powder of the present disclosure is added to another material, there is no adverse effect resulting from the residual fluorine-containing compound having a hydrophilic group, thus enabling the properties intrinsically expected of low molecular weight polytetrafluoroethylene to be sufficiently exhibited. Moreover, the powder of the present disclosure, in addition to having a reduced content of the fluorine-containing compound having a hydrophilic group, has a specific surface area of 7 to 50 m²/g, and, accordingly, when added to another material, the powder of the present disclosure can be readily finely dispersed in the material, thus enabling the effect provided by adding the powder of the present disclosure to be sufficiently exhibited.

Next, the powder and the method for producing the powder of the present disclosure will now be described in detail.

### 1. Powder

The powder of the present disclosure contains particles of low molecular weight polytetrafluoroethylene and has a specific surface area of 7 to 50 m²/g. The powder as used herein is an agglomerate of particles of low molecular weight polytetrafluoroethylene. When low molecular weight polytetrafluoroethylene is produced by emulsion polymerization, the particles of low molecular weight polytetrafluoroethylene are secondary particles formed by aggregation of primary particles obtained by the polymerization. Emulsion polymerization of low molecular weight polytetrafluoroethylene usually provides an aqueous dispersion in which primary particles of low molecular weight polytetrafluoroethylene are dispersed in an aqueous medium. Particles of low molecular weight polytetrafluoroethylene are formed by aggregating the primary particles in the aqueous dispersion. The formed aggregate is recovered and dried to give a powder (an agglomerate) of the particles of low molecular weight polytetrafluoroethylene.

The specific surface area of the powder is 7 to 50 m²/g, more preferably 8 m²/g or more, and even more preferably 9 m²/g or more, and is more preferably 35 m²/g or less and even more preferably 20 m²/g or less. Due to the specific surface area of the powder being within the above range, excellent fine dispersibilty in other materials can be obtained. An excessively small specific surface area results in inferior fine dispersibility in other materials, and an excessively large specific surface area results in requiring a long period of time to disperse the powder in other materials or in an excessively high viscosity when the powder is added to a coating material or the like.

The specific surface area of the powder containing particles of low molecular weight polytetrafluoroethylene can be regulated by, for example, polymerizing tetrafluoroethylene in the presence of a fluorine-containing surfactant, a polymerization initiator, and an aqueous medium to produce primary particles of low molecular weight polytetrafluoroethylene, then coagulating the primary particles of low molecular weight polytetrafluoroethylene obtained by the polymerization, and drying the coagulate at a suitable temperature. The primary particles thus obtained have a relatively small specific surface area. Moreover, particles (secondary particles) of low molecular weight polytetrafluoroethylene constituting the powder thus obtained are not formed by the fusion of the primary particles of low molecular weight polytetrafluoroethylene, but are formed by simple aggregation of the primary particles of low molecular weight polytetrafluoroethylene. Accordingly, the specific surface area of the powder can reflect the specific surface area of the primary particles of low molecular weight polytetrafluoroethylene, and a relatively large specific surface area can be obtained.

The specific surface area of the powder is measured by BET method with a surface analyzer (trade name: MONOSORB, manufactured by QUANTA CHROME INSTRUMENTS) using a mixed gas of 30% nitrogen and 70% helium as a carrier gas and liquid nitrogen for cooling.

The melt viscosity at 380°C of low molecular weight polytetrafluoroethylene constituting the powder of the present disclosure is preferably 1 × 10² to 7 × 10⁵ Pa·s. The "low molecular weight" as used herein means that the melt viscosity is within the above range. High molecular weight polytetrafluoroethylene has a significantly higher melt viscosity than low molecular weight polytetrafluoroethylene, and it is difficult to accurately measure the melt viscosity thereof. The melt viscosity is a value measured while maintaining 2 g of a sample, which is heated for 5 minutes at 380°C in advance, at that temperature under a load of 0.7 MPa in accordance with ASTM D 1238 using a flow tester (manufactured by Shimadzu Corporation) and a 2φ-8L die.

Low molecular weight polytetrafluoroethylene is polytetrafluoroethylene that is melt-fabricable and that does not fibrillate. On the other hand, high molecular weight polytetrafluoroethylene is polytetrafluoroethylene that is non melt-processible and that fibrillates.

Non-melt processibility means a property that the melt flow rate cannot be measured at a temperature higher than the crystal melting point in accordance with ASTM D 1238 and D 2116.

The presence or absence of fibrillability can be determined by "paste extrusion", a representative method of forming a "high molecular weight polytetrafluoroethylene powder" which is a powder made from a polymer of tetrafluoroethylene. Usually, high molecular weight polytetrafluoroethylene can be paste-extruded because it is fibrillable. When a non-fired molded product obtained by paste extrusion shows substantially no strength or elongation (for example, when it shows an elongation of 0% and is broken when stretched), it can be regarded as non-fibrillable.

The average particle size of the particles of low molecular weight polytetrafluoroethylene contained in the powder of the present disclosure is preferably 1.0 to 30 µm and more preferably 2.0 µm or more, and is more preferably 20 µm or less. Due to the average particle size of the particles of low molecular weight polytetrafluoroethylene being within the above range, excellent fine dispersibility in other materials can be obtained.

The average particle size of the particles of low molecular weight polytetrafluoroethylene is the volume-based average particle size (50% cumulative particle size) d50, and can be determined by laser diffractometry.

The melting point of low molecular weight polytetrafluoroethylene is preferably 322 to 333°C, is more preferably 323°C or higher and even more preferably 324°C or higher, and is more preferably 332°C or lower.

The melting point can be determined by drawing a DSC curve by heating low molecular weight polytetrafluoroethylene, which has no history of being heated to a temperature of 300°C or higher, at 10°C/min with a differential scanning calorimeter (DSC), and determining the temperature corresponding to the minimum point of the enthalpy of fusion in a temperature range of 250 to 380°C on a DSC curve.

### (Fluorine-containing compound having hydrophilic group)

The powder of the present disclosure contains a fluorine-containing compound having a hydrophilic group. The fluorine-containing compound having a hydrophilic group includes a fluorine-containing surfactant added during polymerization and a fluorine-containing compound having a hydrophilic group produced by the polymerization of a monomer.

The hydrophilic group contained in the fluorine-containing compound as used herein is preferably an anionic group such as an acid group, e.g., -NH₂, -PO₃M, -OPO₃M, -SO₃M, - OSO₃M, and -COOM, wherein M represents a cation. In particular, the hydrophilic group is preferably -SO₃M or -COOM, and more preferably -COOM.

The content of the fluorine-containing compound having a hydrophilic group in the powder is 250 ppb by mass or less, preferably 100 ppb by mass or less, more preferably 50 ppb by mass or less, even more preferably 25 ppb by mass or less, yet more preferably 10 ppb by mass or less, and particularly preferably 5 ppb by mass or less, and is preferably more than 0 ppb by mass, based on the powder.

The content of the fluorine-containing compound having a hydrophilic group in the powder can be regulated by, for example, polymerizing tetrafluoroethylene in the presence of a fluorine-containing surfactant, a polymerization initiator, and an aqueous medium to produce an aqueous dispersion containing primary particles of low molecular weight polytetrafluoroethylene, then adding a relatively large amount of a radical generator to the aqueous dispersion, and heattreating the mixture.

The content of the fluorine-containing compound having a hydrophilic group in the powder can be quantified by a known method. For example, the content can be quantified by LC/MS analysis.

First, methanol is added to the powder to perform extraction, and the resulting extract is subjected to LC/MS analysis. To further increase extraction efficiency, treatment by Soxhlet extraction, ultrasonic treatment, or the like may be performed. The resulting extract is suitably concentrated by nitrogen purging, and the fluorine-containing compound in the concentrated extract is measured by LC/MS.

From the resulting LC/MS spectrum, molecular weight information is extracted, and a match with the structural formula of a candidate fluorine-containing compound having a hydrophilic group is checked.

Thereafter, aqueous solutions having five or more different content levels of the confirmed fluorine-containing compound having a hydrophilic group are prepared, and LC/MS analysis of the aqueous solution of each content is carried out, and the relationship between the content and the area for the content is plotted, and a calibration curve is drawn.

Then, using the calibration curve, the area of the LC/MS chromatogram of the fluorine-containing compound having a hydrophilic group in the extract can be converted to the content of the fluorine-containing compound having a hydrophilic group.

Note that the resulting extract can be concentrated by nitrogen purging, thus enabling the lower quantification limit of the measurement method to be lowered.

The powder in one embodiment contains at least a fluorine-containing surfactant as the fluorine-containing compound having a hydrophilic group. The fluorine-containing surfactant may be a fluorine-containing surfactant commonly used in the polymerization of tetrafluoroethylene. A typical compound as the fluorine-containing surfactant is a fluorine-containing surfactant having a molecular weight of 1,000 g/mol or less and preferably 800 g/mol or less.

The fluorine-containing surfactant is not limited as long as it is a surfactant containing at least one fluorine atom, and conventionally known fluorine-containing surfactants can be used.

Examples of the fluorine-containing surfactant include anionic fluorine-containing surfactants. The anionic fluorinecontaining surfactant may be, for example, a fluorine atomcontaining surfactant having 20 or fewer carbon atoms in total in the portion excluding the anionic group.

The fluorine-containing surfactant may also be a fluorine-containing surfactant in which the molecular weight of the anionic moiety is 1,000 or less.

The "anionic moiety" means a portion of the fluorine-containing surfactant excluding the cation. For example, in the case of F(CF₂)ₙ₁COOM represented by formula (I), which will be described below, the anionic moiety is the "F(CF₂)ₙ₁COO" portion.

Examples of the fluorine-containing surfactant also include fluorine-containing surfactants having a Log POW of 3.5 or less. The Log POW is a partition coefficient between 1-octanol and water, which is represented by Log P (wherein P represents the ratio between the concentration of the fluorine-containing surfactant in octanol and the concentration of the fluorine-containing surfactant in water in a phase-separated octanol/water (1:1) liquid mixture containing the fluorine-containing surfactant).

The Log POW is calculated by performing HPLC on standard substances (heptanoic acid, octanoic acid, nonanoic acid, and decanoic acid) having a known octanol/water partition coefficient under conditions having column: TOSOH ODS-120T column (φ4.6 mm × 250 mm, manufactured by Tosoh Corporation), eluent: acetonitrile/0.6% by mass HClO₄ solution =1/1 (vol/vol %), flow rate: 1.0 ml/min, sample volume: 300 µL, column temperature: 40°C, detection light: UV 210 nm to construct a calibration curve concerning each elution time and known octanol/water partition coefficient, and determining the HPLC elution time of a sample liquid based on the calibration curve.

Specific examples of the fluorine-containing surfactant include those described in U.S. Patent Application Publication No. 2007/0015864, U.S. Patent Application Publication No. 2007/0015865, U.S. Patent Application Publication No. 2007/0015866, and U.S. Patent Application Publication No. 2007/0276103, U.S. Patent Application Publication No. 2007/0117914, U.S. Patent Application Publication No. 2007/142541, U.S. Patent Application Publication No. 2008/0015319, U.S. Patent No. 3,250,808, U.S. Patent No. 3,271,341, Japanese Patent Laid-Open No. 2003-119204, International Publication No. WO 2005/042593, International Publication No. WO 2008/060461, International Publication No. WO 2007/046377, Japanese Patent Laid-Open No. 2007-119526, International Publication No. WO 2007/046482, International Publication No. WO 2007/046345, U.S. Patent Application Publication No. 2014/0228531, International Publication No. WO 2013/189824, and International Publication No. WO 2013/189826.

Examples of the anionic fluorine-containing surfactant include a compound represented by the following general formula (N⁰):

Xⁿ⁰-Rfⁿ⁰-Y⁰ (N⁰)

wherein Xⁿ⁰ is H, Cl, or F; Rfⁿ⁰ is a linear, branched, or cyclic alkylene group having 3 to 20 carbon atoms in which some or all of H are replaced by F, the alkylene group optionally containing one or more ether bonds in which some of H are optionally replaced by Cl; and Y⁰ is an anionic group.

The anionic group Y⁰ may be -COOM, -SO₂M, or -SO₃M, and may be -COOM or -SO₃M.

M is H, a metal atom, NR⁷₄, optionally substituted imidazolium, optionally substituted pyridinium, or optionally substituted phosphonium, and R⁷ is H or an organic group.

Examples of the metal atom include alkali metals (Group 1) and alkaline earth metals (Group 2), such as Na, K, or Li.

R⁷ may be H or a C₁₋₁₀ organic group, may be H or a C₁₋₄ organic group, and may be H or a C₁₋₄ alkyl group.

M may be H, a metal atom, or NR⁷₄, may be H, an alkali metal (Group 1), an alkaline earth metal (Group 2), or NR⁷₄, and may be H, Na, K, Li, or NH₄.

In the Rfⁿ⁰, 50% or more of H atoms may be replaced by fluorine atoms.

Examples of the compound represented by general formula (N⁰) include a compound represented by the following general formula (N¹):

Xⁿ⁰-(CF₂)ₘ₁-Y⁰ (N¹)

wherein Xⁿ⁰ is H, Cl, or F; m1 is an integer of 3 to 15; and Y⁰ is as defined above;
a compound represented by the following general formula (N²):

   Rfⁿ¹-O-(CF(CF₃)CF₂O)ₘ₂CFXⁿ¹-Y⁰ (N²)

   wherein Rfⁿ¹ is a perfluoroalkyl group having 1 to 5 carbon atoms; m2 is an integer of 0 to 3; Xⁿ¹ is F or CF₃; and Y⁰ is as defined above;
a compound represented by the following general formula (N³):

   Rfⁿ²(CH₂)ₘ₃-(Rfⁿ³)_{q}-Y⁰ (N³)

   wherein Rfⁿ² is a partially or fully fluorinated alkyl group having 1 to 13 carbon atoms and optionally containing an ether bond and/or a chlorine atom; m3 is an integer of 1 to 3; Rfⁿ³ is a linear or branched perfluoroalkylene group having 1 to 3 carbon atoms, q is 0 or 1; and Y⁰ is as defined above;
a compound represented by the following general formula (N⁴):

   Rf^{r4}-O-(CYⁿ¹Yⁿ²)ₚCF₂-Y⁰ (N⁴)

   wherein Rfⁿ⁴ is a linear or branched, partially or fully fluorinated alkyl group having 1 to 12 carbon atoms and optionally containing an ether bond; Yⁿ¹ and Yⁿ² are the same or different and are each independently H or F; p is 0 or 1; and Y⁰ is as defined above; and
a compound represented by the following general formula (N⁵): 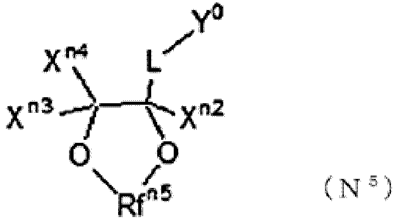 wherein Xⁿ², Xⁿ³, and Xⁿ⁴ may be the same or different and are each independently H, F, or a linear or branched, partially or fully fluorinated alkyl group having 1 to 6 carbon atoms and optionally containing an ether bond; Rfⁿ⁵ is a linear or branched partially or fully fluorinated alkylene group having 1 to 3 carbon atoms and optionally containing an ether bond; L is a linking group; and Y⁰ is as defined above, provided that the total number of carbon atoms in Xⁿ², Xⁿ³, Xⁿ⁴, and Rfⁿ⁵ is 18 or less.

More specific examples of the compound represented by the above general formula (N⁰) include a perfluorocarboxylic acid (I) represented by the following general formula (I), an ω-H perfluorocarboxylic acid (II) represented by the following general formula (II), a perfluoroethercarboxylic acid (III) represented by the following general formula (III), a perfluoroalkylalkylenecarboxylic acid (IV) represented by the following general formula (IV), a perfluoroalkoxyfluorocarboxylic acid (V) represented by the following general formula (V), a perfluoroalkylsulfonic acid (VI) represented by the following general formula (VI), an ω-H perfluorosulfonic acid (VII) represented by the following general formula (VII), a perfluoroalkylalkylene sulfonic acid (VIII) represented by the following general formula (VIII), an alkylalkylene carboxylic acid (IX) represented by the following general formula (IX), a fluorocarboxylic acid (X) represented by the following general formula (X), an alkoxyfluorosulfonic acid (XI) represented by the following general formula (XI), a compound (XII) represented by the following general formula (XII), and a compound (XIII) represented by the following general formula (XIII).

The perfluorocarboxylic acid (I) is a compound represented by the following general formula (I):

F(CF₂)ₙ₁COOM (I)

wherein n1 is an integer of 3 to 13; and M is H, a metal atom,
NR⁷₄, optionally substituted imidazolium, optionally substituted pyridinium, or optionally substituted phosphonium,
wherein R⁷ is H or an organic group.

The ω-H perfluorocarboxylic acid (II) described above is represented by the following general formula (II):

H(CF₂)ₙ₂COOM (II)

wherein n2 is an integer of 4 to 15; and M is as defined above.

The perfluoroethercarboxylic acid (III) is represented by the following general formula (III):

Rf¹-O-(CF(CF₃)CF₂O)ₙ₃CF(CF₃)COOM (III)

wherein Rf¹ is a perfluoroalkyl group having 1 to 5 carbon atoms; n3 is an integer of 0 to 3; and M is as defined above.

The perfluoroalkylalkylenecarboxylic acid (IV) is represented by the following general formula (IV):

Rf²(CH₂)ₙ₄Rf³COOM (IV)

wherein Rf² is a perfluoroalkyl group having 1 to 5 carbon atoms; Rf³ is a linear or branched perfluoroalkylene group having 1 to 3 carbon atoms; n4 is an integer of 1 to 3; and M is as defined above.

The alkoxyfluorocarboxylic acid (V) is represented by the following general formula (V):

Rf ⁴-O-CY¹Y²CF₂-COOM (V)

wherein Rf⁴ is a linear or branched partially or fully fluorinated alkyl group having 1 to 12 carbon atoms and optionally containing an ether bond and/or a chlorine atom; Y¹ and Y² are the same or different and are each H or F; and M is as defined above.

The perfluoroalkylsulfonic acid (VI) is represented by the following general formula (VI):

F(CF₂)ₙ₅SO₃M (VI)

wherein n5 is an integer of 3 to 14; and M is as defined above.

The ω-H perfluorosulfonic acid (VII) is represented by the following general formula (VII):

H(CF₂)ₙ₆SO₃M (VII)

wherein n6 is an integer of 4 to 14; and M is as defined above.

The perfluoroalkylalkylenesulfonic acid (VIII) is represented by the following general formula (VIII):

Rf⁵(CH₂)ₙ₇SO₃M (VIII)

wherein Rf⁵ is a perfluoroalkyl group having 1 to 13 carbon atoms; n7 is an integer of 1 to 3; and M is as defined above.

The alkylalkylenecarboxylic acid (IX) is represented by the following general formula (IX):

Rf⁶(CH₂)ₙ₈COOM (IX)

wherein Rf⁶ is a linear or branched partially or fully fluorinated alkyl group having 1 to 13 carbon atoms and optionally containing an ether bond; n8 is an integer of 1 to 3; and M is as defined above.

The fluorocarboxylic acid (X) is represented by the following general formula (X):

Rf⁷-O-Rf⁸-O-CF₂-COOM (X)

wherein Rf⁷ is a linear or branched, partially or fully fluorinated alkyl group having 1 to 6 carbon atoms and optionally containing an ether bond and/or a chlorine atom; Rf⁸ is a linear or branched, partially or fully fluorinated alkyl group having 1 to 6 carbon atoms; and M is as defined above.

The alkoxyfluorosulfonic acid (XI) is represented by the following general formula (XI):

Rf⁹-O-CY¹Y²CF₂-SO₃M (XI)

wherein Rf⁹ is a linear or branched partially or fully fluorinated alkyl group having 1 to 12 carbon atoms and optionally containing an ether bond and optionally containing chlorine; Y¹ and Y² are the same or different and are each H or F; and M is as defined above.

The compound (XII) is represented by the following general formula (XII): 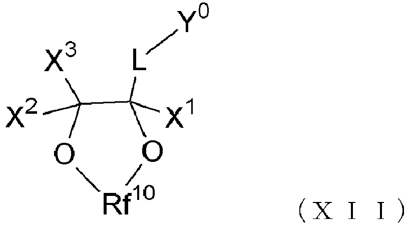 wherein X¹, X², and X³ may be the same or different and are H, F, and a linear or branched partially or fully fluorinated alkyl group having 1 to 6 carbon atoms and optionally containing an ether bond; Rf¹⁰ is a perfluoroalkylene group having 1 to 3 carbon atoms; L is a linking group; and Y⁰ is an anionic group.

Y⁰ may be -COOM, -SO₂M, or -SO₃M, and may be -SO₃M or COOM, wherein M is as defined above.

Examples of L include a single bond, and a partially or fully fluorinated alkylene group having 1 to 10 carbon atoms and optionally containing an ether bond.

The compound (XIII) is represented by the following general formula (XIII):

Rf¹¹-O-(CF₂CF(CF₃)O)ₙ₉(CF₂O)ₙ₁₀CF₂COOM (XIII)

wherein Rf¹¹ is a fluoroalkyl group having 1 to 5 carbon atoms and containing chlorine; n9 is an integer of 0 to 3; n10 is an integer of 0 to 3; and M is as defined above. An example of the compound (XIII) is CF₂ClO(CF₂CF(CF₃)O)ₙ₉(CF₂O)ₙ₁₀CF₂COONH₄ (a mixture having an average molecular weight of 750, n9 and n10 in the formula are as defined above).

As described above, examples of the anionic fluorine-containing surfactant include a carboxylic acid-based surfactant and a sulfonic acid-based surfactant.

The fluorine-containing surfactant may be one fluorine-containing surfactant, or may be a mixture containing two or more fluorine-containing surfactants.

The fluorine-containing surfactant preferably does not have a methylene group (-CH₂-), and more preferably does not have a C-H bond. The use of a fluorine-containing surfactant that does not have a methylene group (-CH₂-) or a C-H bond within the molecule enables tetrafluoroethylene to be smoothly polymerized in the presence of an aqueous medium.

The number of H atoms that the hydrophobic group of the fluorine-containing surfactant has is preferably 0 or 1, and more preferably 0. The use of a fluorine-containing surfactant in which the number of H atoms bonded to carbon atoms constituting the hydrophobic group is small enables tetrafluoroethylene to be smoothly polymerized in the presence of an aqueous medium. The number of carbon atoms in the hydrophobic group of the fluorine-containing surfactant having a hydrophobic group and a hydrophilic group is preferably 1 to 50, more preferably 3 to 20, and even more preferably 6 to 12. The hydrophobic group usually constitutes the above-described "portion excluding the anionic group" in the molecular structure of the fluorine-containing surfactant. Examples of the hydrophilic group include groups exemplified as the anionic group Y⁰. The fluorine-containing surfactant may be a saturated fluorinated surfactant in which all carbon atoms bonded to the hydrophobic group are substituted with fluorine atoms.

Examples of fluorine-containing surfactants, among the above-described anionic fluorine-containing surfactants, include compounds represented by general formula (N¹), compounds represented by general formula (N²), and compounds represented by general formula (N⁴):

Rfⁿ⁴-O-(CYⁿ¹F)ₚCF₂-Y⁰ (N⁴)

wherein Rfⁿ⁴ is a linear or branched, partially or fully fluorinated alkyl group having 1 to 12 carbon atoms and optionally containing an ether bond (provided that those having -CH₂- are excluded), Yⁿ¹ is H or F, p is 0 or 1, and Y⁰ is as defined above; and compounds represented by general formula (N⁵): 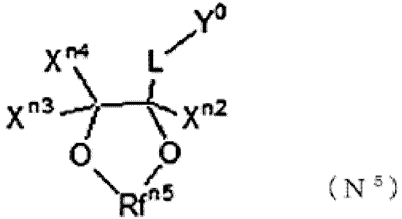 wherein Xⁿ², Xⁿ³, and Xⁿ⁴ may be the same or different and are each independently H, F, or a linear or branched, partially or fully fluorinated alkyl group having 1 to 6 carbon atoms and optionally containing an ether bond (provided that those having -CH₂- are excluded), provided that Xⁿ³ and Xⁿ⁴ are not simultaneously H; Rfⁿ⁵ is a linear or branched, partially or fully fluorinated alkylene group having 1 to 3 carbon atoms and optionally containing an ether bond (provided that those having -CH₂- are excluded); L is a linking group; and Y⁰ is as defined above, provided that the total number of carbon atoms in Xⁿ², Xⁿ³, Xⁿ⁴, and Rfⁿ⁵ is 18 or less.

Among the above-described anionic fluorine-containing surfactants, the fluorine-containing surfactant is preferably at least one selected from the group consisting of perfluorocarboxylic acid (I) represented by general formula (I), ω-H perfluorocarboxylic acid (II) represented by general formula (II), perfluoroethercarboxylic acid (III) represented by general formula (III), perfluoroalkylalkylenecarboxylic acid (IV) represented by general formula (IV), perfluoroalkoxyfluorocarboxylic acid (V) represented by general formula (V), perfluoroalkylsulfonic acid (VI) represented by general formula (VI), ω-H perfluorosulfonic acid (VII) represented by general formula (VII), perfluoroalkylalkylenesulfonic acid (VIII) represented by general formula (VIII), fluorocarboxylic acid (X) represented by general formula (X): Rf⁷-O-Rf⁸-O-CF₂-COOM wherein Rf⁷ is a linear or branched, partially or fully fluorinated alkyl group having 1 to 6 carbon atoms and optionally containing an ether bond and/or a chlorine atom (provided that those having -CH₂- are excluded), Rf⁸ is a linear or branched, partially or fully fluorinated alkyl group having 1 to 6 carbon atoms (provided that those having -CH₂-are excluded), and M is as defined above, an alkoxyfluorosulfonic acid (XI) represented by general formula (XI): Rf⁹-O-CY¹FCF₂-SO₃M
wherein Rf⁹ is a linear or branched, partially or fully fluorinated alkyl group having 1 to 12 carbon atoms, optionally containing an ether bond, and optionally containing chlorine (provided that those having -CH₂- are excluded), Y¹ is H or F, and M is as defined above, a compound (XII) represented by general formula (XII): 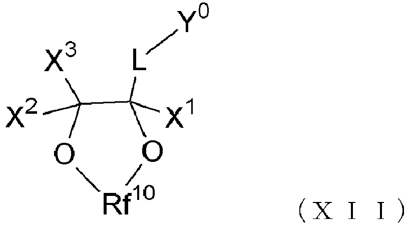
wherein X¹, X², and X³ may be the same or different and are each independently H, F, and a linear or branched, partially or fully fluorinated alkyl group having 1 to 6 carbon atoms and optionally containing an ether bond (provided that those having -CH₂- are excluded), provided that X² and X³ are not simultaneously H, Rf¹⁰ is a perfluoroalkylene group having 1 to 3 carbon atoms, L is a linking group, and Y⁰ is an anionic group, and
a compound (XIII) represented by general formula (XIII): Rf¹¹-O-(CF₂CF(CF₃)O)ₙ₉(CF₂O)ₙ₁₀CF₂COOM
wherein Rf¹¹ is a fluoroalkyl group having 1 to 5 carbon atoms containing chlorine (provided that those having -CH₂- are excluded), n9 is an integer of 0 to 3, n10 is an integer of 0 to 3, and M is as defined above. The use of such a fluorine-containing surfactant enables tetrafluoroethylene to be smoothly polymerized in the presence of an aqueous medium.

Examples of the fluorine-containing surfactant include compounds represented by the following formulae. The fluorine-containing surfactant may be a mixture of these compounds.
F(CF₂)₇COOM,
F(CF₂)₅COOM,
H(CF₂)₆COOM,
H(CF₂)₇COOM,
CF₃O(CF₂)₃OCHFCF₂COOM,
C₃F₇OCF(CF₃)CF₂OCF(CF₃)COOM,
CF₃CF₂CF₂OCF(CF₃)COOM,
CF₃CF₂OCF₂CF₂OCF₂COOM,
C₂F₅OCF(CF₃)CF₂OCF(CF₃)COOM,
CF₃OCF(CF₃)CF₂OCF(CF₃)COOM,
CF₂ClCF₂CF₂OCF(CF₃)CF₂OCF₂COOM,
CF₂ClCF₂CF₂OCF₂CF(CF₃)OCF₂COOM,
CF₂ClCF(CF₃)OCF(CF₃)CF₂OCF₂COOM,
CF₂ClCF(CF₃)OCF₂CF(CF₃)OCF₂COOM, 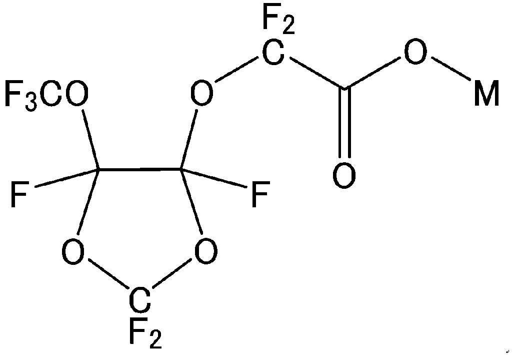
wherein M is H, a metal atom, NR⁷₄, optionally substituted imidazolium, optionally substituted pyridinium, or optionally substituted phosphonium, and R⁷ is H or an organic group.

When the powder contains at least a fluorine-containing surfactant as the fluorine-containing compound having a hydrophilic group, the content of the fluorine-containing surfactant in the powder is preferably 25 ppb by mass or less, more preferably 10 ppb by mass or less, even more preferably 5 ppb by mass or less, and yet more preferably 1 ppb by mass or less, and is preferably more than 0 ppb by mass, based on the powder.

The powder in one embodiment contains a compound (I) represented by the following general formula (I) as the fluorine-containing compound having a hydrophilic group:

General formula (I): F(CF₂)ₙ₁COOM

wherein n1 is an integer of 3 to 13; and M is H, a metal atom, NR⁷₄, optionally substituted imidazolium, optionally substituted pyridinium, or optionally substituted phosphonium, wherein R⁷ is H or an organic group.

When the powder contains at least the compound (I) represented by general formula (I) as the fluorine-containing compound having a hydrophilic group, the content of the compound represented by general formula (I) in the powder is preferably 25 ppb by mass or less, more preferably 10 ppb by mass or less, even more preferably 5 ppb by mass or less, and yet more preferably 1 ppb by mass or less, and is preferably more than 0 ppb by mass, based on the powder.

The powder in one embodiment contains a compound represented by the following general formula (H1) as the fluorine-containing compound having a hydrophilic group:

General formula (H1) : [X-Rf-A⁻]ᵢMⁱ⁺

wherein X is H, Cl, Br, F, or I; Rf is a linear or branched, partially fluorinated or fully fluorinated aliphatic group, or a linear or branched, partially fluorinated or fully fluorinated aliphatic group interrupted by at least one oxygen atom; A⁻ is an acid group; Mⁱ⁺ is a cation having a valence of i; and i represents an integer of 1 to 3.

When the powder contains at least a compound represented by general formula (H1) as the fluorine-containing compound having a hydrophilic group, the content of the compound represented by general formula (H1) in the powder is preferably 250 ppb by mass or less, more preferably 100 ppb by mass or less, even more preferably 50 ppb by mass or less, yet more preferably 25 ppb by mass or less, particularly preferably 10 ppb by mass or less, and most preferably 5 ppb by mass or less, and is preferably more than 0 ppb by mass, based on the powder.

The powder in one embodiment contains a compound represented by the following general formula (H2) as the fluorine-containing compound having a hydrophilic group:

General formula (H2): [Cₙ₋₁F₂ₙ₋₁COO⁻]M⁺

wherein n is an integer of 9 to 14, and M⁺ represents a cation.

The compound represented by general formula (H2) (perfluoroalkanoic acid) is known to be formed during polymerization when perfluoroalkyl vinyl ether or the like is used as a monomer (see International Publication No. WO 2019/161153).

When the powder contains at least a compound represented by general formula (H2) as the fluorine-containing compound having a hydrophilic group, the content of the compound represented by general formula (H2) in the powder is preferably 25 ppb by mass or less, more preferably 10 ppb by mass or less, even more preferably 5 ppb by mass or less, and yet more preferably 1 ppb by mass or less, and is preferably more than 0 ppb by mass, based on the powder.

The powder in one embodiment contains a compound represented by the following general formula (H3) as the fluorine-containing compound having a hydrophilic group:

General formula (H3): [R¹-O-L-CO₂⁻]M⁺

wherein R¹ is a linear or branched, partially fluorinated or fully fluorinated aliphatic group, or a linear or branched, partially fluorinated or fully fluorinated aliphatic group interrupted by at least one oxygen atom; L represents a linear or branched non-fluorinated, partially fluorinated, or fully fluorinated alkylene group; and M⁺ represents a cation.

When the powder contains at least a compound represented by general formula (H3) as the fluorine-containing compound having a hydrophilic group, the content of the compound represented by general formula (H3) in the powder is preferably 25 ppb by mass or less, more preferably 10 ppb by mass or less, even more preferably 5 ppb by mass or less, and yet more preferably 1 ppb by mass or less, and is preferably more than 0 ppb by mass, based on the powder.

The powder in one embodiment contains a compound represented by general formula (H4) as the fluorine-containing compound having a hydrophilic group:

General Formula (H4): H-Rfⁿ⁰-Y⁰

wherein Rfⁿ⁰ is a linear, branched, or cyclic alkylene group having 3 to 20 carbon atoms in which some or all of H are replaced by F, the alkylene group optionally containing one or more ether bonds in which some of H are optionally replaced by Cl; and Y⁰ is an anionic group.

Examples of the compound represented by general formula (H4) include compounds represented by any of the following general formulae:

General formula (H4-1): [H- (CF₂)ₘ₁CO₂⁻]M⁺

wherein m1 is an integer of 3 to 19, and M⁺ represents a cation;

General formula (H4-2): [H-(CF₂)ₘ₂-(CF(CF₃))ₘ₃-CO₂⁻]M⁺

wherein m2 is an integer of 1 to 17, m3 is an integer of 1 to 9, and M⁺ represents a cation, provided that m2 and m3 are selected so as to satisfy 3 ≤ (m2 + 2 × m3) ≤ 19, and the repeating units occur in any order in the formulae.

When the powder contains at least a compound represented by general formula (H4) as the fluorine-containing compound having a hydrophilic group, the content of the compound represented by general formula (H4) in the powder is preferably 250 ppb by mass or less, more preferably 100 ppb by mass or less, even more preferably 50 ppb by mass or less, and yet more preferably 25 ppb by mass or less, and is preferably more than 0 ppb by mass, based on the powder.

### (Low molecular weight polytetrafluoroethylene)

Low molecular weight polytetrafluoroethylene (low molecular weight PTFE) may be a tetrafluoroethylene (TFE) homopolymer solely containing TFE unit, or may be modified polytetrafluoroethylene containing TFE unit and a modifying monomer unit.

The modifying monomer is not limited as long as it can be copolymerized with TFE, and examples include fluoromonomers and non-fluoromonomers. Also, one modifying monomer may be used, or multiple modifying monomers may be used.

Examples of the non-fluoromonomer include, but are not limited to, monomers represented by the general formula:

CH₂=CR^{Q1}-LR^{Q2}

wherein R^{Q1} represents a hydrogen atom or an alkyl group; L represents a single bond, -CO-O-*, -O-CO-*, or -O-; ***** indicates the position of bonding to R^{Q2}; R^{Q2} represents a hydrogen atom, an alkyl group, or a nitrile group.

Examples of the non-fluoromonomer include methyl acrylate, methyl methacrylate, ethyl acrylate, ethyl methacrylate, propyl acrylate, propyl methacrylate butyl acrylate, butyl methacrylate, hexyl methacrylate, cyclohexyl methacrylate, vinyl methacrylate, vinyl acetate, acrylic acid, methacrylic acid, acrylonitrile, methacrylonitrile, ethyl vinyl ether, and cyclohexyl vinyl ether. Among these, the non-fluoromonomer is preferably butyl methacrylate, vinyl acetate, or acrylic acid.

Examples of the fluoromonomer include perfluoroolefins such as hexafluoropropylene (HFP); hydrogen-containing fluoroolefins such as trifluoroethylene and vinylidene fluoride (VDF); perhaloolefins such as chlorotrifluoroethylene; perfluorovinyl ethers; (perfluoroalkyl)ethylenes; and perfluoroallyl ethers.

Examples of the perfluorovinyl ether include, but are not limited to, perfluoro unsaturated compounds represented by general formula (A):

CF₂=CF-ORf (A)

wherein Rf represents a perfluoro organic group. The "perfluoro organic group" as used herein means an organic group in which all hydrogen atoms bonded to the carbon atoms are replaced by fluorine atoms. The perfluoro organic group may have ether oxygen.

Examples of the perfluorovinyl ether include perfluoro(alkyl vinyl ether) (PAVE) in which Rf is a perfluoroalkyl group having 1 to 10 carbon atoms in the general formula (A). The perfluoroalkyl group preferably has 1 to 5 carbon atoms.

Examples of the perfluoroalkyl group in PAVE include a perfluoromethyl group, a perfluoroethyl group, a perfluoropropyl group, a perfluorobutyl group, a perfluoropentyl group, and a perfluorohexyl group.

Examples of the perfluorovinyl ether further include those represented by general formula (A) in which Rf is a perfluoro(alkoxyalkyl) group having 4 to 9 carbon atoms; those in which Rf is a group represented by the following formula: 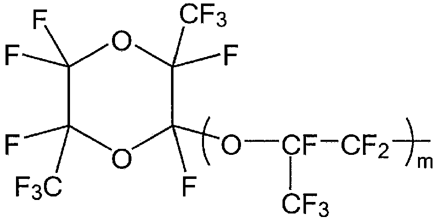 wherein m represents 0 or an integer of 1 to 4; and those in which Rf is a group represented by the following formula:

CF₃CF₂CF₂-(O-CF(CF₃)-CF₂)ₙ-

wherein n represents an integer of 1 to 4.

Examples of hydrogen-containing fluoroolefins include CH₂=CF₂, CFH=CH₂, CFH=CF₂, CH₂=CFCF₃, CH₂=CHCF₃, CHF=CHCF₃ (E-form), and CHF=CHCF₃ (Z-form).

Examples of the (perfluoroalkyl)ethylene (PFAE) include, but are not limited to, (perfluorobutyl) ethylene (PFBE), and (perfluorohexyl) ethylene.

Examples of perfluoroallyl ether include fluoromonomers represented by the general formula:

CF₂=CF-CF₂-ORf

wherein Rf represents a perfluoro organic group.

Rf in the above general formula is the same as Rf in general formula (A). Rf is preferably a perfluoroalkyl group having 1 to 10 carbon atoms or a perfluoroalkoxyalkyl group having 1 to 10 carbon atoms. The perfluoroallyl ether is preferably at least one selected from the group consisting of CF₂=CF-CF₂-O-CF₃, CF₂=CF-CF₂-O-C₂F₅, CF₂=CF-CF₂-O-C₃F₇, and CF₂=CF-CF₂-O-C₄F₉, more preferably at least one selected from the group consisting of CF₂=CF-CF₂-O-C₂F₅, CF₂=CF-CF₂-O-C₃F₇, and CF₂=CF-CF₂-O-C₄F₉, and still more preferably CF₂=CF-CF₂-O-CF₂CF₂CF₃.

The modifying monomer is also preferably exemplified by a modifying monomer (3) having a monomer reactivity ratio of 0.1 to 8. The presence of the modifying monomer (3) makes it possible to obtain PTFE particles having a small particle size, and to thereby obtain an aqueous dispersion having high dispersion stability.

Here, the monomer reactivity ratio in the copolymerization with TFE is a value obtained by dividing a rate constant when the propagating radical reacts with TFE when the propagating radical is less than a repeating unit based on TFE by a rate constant when the propagating radical reacts with a modifying monomer. A smaller monomer reactivity ratio indicates higher reactivity of the modifying monomers with TFE. The monomer reactivity ratio can be determined by copolymerizing TFE with the modifying monomers, determining the composition of the polymer formed immediately after initiation, and calculating the monomer reactivity ratio by Fineman-Ross equation.

The copolymerization is performed using 3,600 g of deionized degassed water, 1,000 ppm by mass of ammonium perfluorooctanoate based on the water, and 100 g of paraffin wax contained in an autoclave made of stainless steel with an internal volume of 6.0 L at a pressure of 0.78 MPaG and a temperature of 70°C. A modifying monomer in an amount of 0.05 g, 0.1 g, 0.2 g, 0.5 g, or 1.0 g is added to the reactor, and then 0.072 g of ammonium persulfate (20 ppm by mass based on the water) is added thereto. To maintain the polymerization pressure at 0.78 MPaG, TFE is continuously fed. When the amount of TFE charged reaches 1,000 g, stirring is stopped, and the pressure is released until the pressure in the reactor decreases to the atmospheric pressure. After cooling, the paraffin wax is separated to give an aqueous dispersion containing the produced polymer. The aqueous dispersion is stirred so that the produced polymer coagulates, and the polymer is dried at 150°C. The composition of the resulting polymer is calculated by suitably combining NMR, FT-IR, elemental analysis, and X-ray fluorescence analysis according to the type of monomer.

The modifying monomer (3) having a monomer reactivity ratio of 0.1 to 8 is preferably at least one selected from the group consisting of modifying monomers represented by formulae (3a) to (3d):

CH₂=CH-Rf¹ (3a)

wherein Rf¹ is a perfluoroalkyl group having 1 to 10 carbon atoms;

CF₂=CF-O-Rf² (3b)

wherein Rf² is a perfluoroalkyl group having 1 to 2 carbon atoms;

CF₂=CF-O-(CF₂)ₙCF=CF₂ (3c)

wherein n is 1 or 2; and 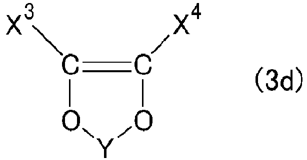 wherein X³ and X⁴ are each F, Cl, or a methoxy group; and Y is represented by formula Y1 or Y2; and

-CF=CF- (Y1)

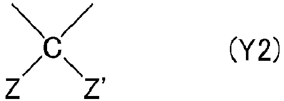

wherein Y2, Z, and **Z'** are each F or a fluorinated alkyl group having 1 to 3 carbon atoms.

The content of the modifying monomer (3) unit is preferably in the range of 0.00001 to 1.0% by mass based on the total polymerization units of the PTFE. The lower limit is more preferably 0.0001% by mass, more preferably 0.0005% by mass, even more preferably 0.001% by mass, and yet more preferably 0.005% by mass. The upper limit is, in ascending order of preference, 0.90% by mass, 0.50% by mass, 0.40% by mass, 0.30% by mass, 0.20% by mass, 0.15% by mass, 0.10% by mass, 0.08% by mass, 0.05% by mass, and 0.01% by mass.

The modifying monomer is preferably at least one selected from the group consisting of hexafluoropropylene, chlorotrifluoroethylene, vinylidene fluoride, perfluoro(alkyl vinyl ether), (perfluoroalkyl)ethylene, ethylene, and modifying monomers having a functional group capable of reacting by radical polymerization and a hydrophilic group, in view of obtaining an aqueous dispersion having a small average primary particle size of primary particles, a small aspect ratio of primary particles, and excellent stability. The use of the modifying monomer makes it possible to obtain an aqueous dispersion of PTFE having a smaller average primary particle size, a small aspect ratio of primary particles, and excellent dispersion stability. Also, an aqueous dispersion having a smaller amount of uncoagulated polymer can be obtained.

From the viewpoint of reactivity with TFE, the modifying monomer preferably contains at least one selected from the group consisting of hexafluoropropylene, perfluoro(alkyl vinyl ether), and (perfluoroalkyl)ethylene.

More preferably, the modifying monomer contains at least one selected from the group consisting of hexafluoropropylene, perfluoro(methyl vinyl ether), perfluoro(propyl vinyl ether), (perfluorobutyl)ethylene, (perfluorohexyl)ethylene, and (perfluorooctyl)ethylene.

The total amount of hexafluoropropylene unit, perfluoro(alkyl vinyl ether) unit, and (perfluoroalkyl)ethylene unit is preferably in the range of 0.00001 to 1% by mass based on all polymerized units in PTFE. The lower limit of the total amount is more preferably 0.0001% by mass, more preferably 0.0005% by mass, even more preferably 0.001% by mass, and yet more preferably 0.005% by mass. The upper limit is, in ascending order of preference, 0.80% by mass, 0.70% by mass, 0.50% by mass, 0.40% by mass, 0.30% by mass, 0.20% by mass, 0.15% by mass, 0.10% by mass, 0.08% by mass, 0.05% by mass, or 0.01% by mass.

The modifying monomer also preferably includes a modifying monomer having a functional group capable of reacting by radical polymerization and a hydrophilic group (hereinafter, referred to as a "modifying monomer (A)").

The presence of the modifying monomer (A) makes it possible to obtain PTFE particles having a small primary particle size, and to thereby obtain an aqueous dispersion having high dispersion stability. Also, the amount of uncoagulated polymer can be reduced. Moreover, the aspect ratio of the primary particles can be reduced.

The amount of the modifying monomer (A) used is preferably an amount exceeding 0.1 ppm by mass of the aqueous medium, more preferably an amount exceeding 0.5 ppm by mass, even more preferably an amount exceeding 1.0 ppm by mass, yet more preferably 5 ppm by mass or more, and particularly preferably 10 ppm by mass or more. When the amount of the modifying monomer (A) used is excessively small, the average primary particle size of PTFE obtained may not be sufficiently small.

The amount of the modifying monomer (A) used may be within the above range, and the upper limit may be, for example, 5,000 ppm by mass. Also, in the production method, the modifying monomer (A) may be added to the system during the reaction in order to improve the stability of the aqueous dispersion during or after the reaction.

The modifying monomer (A) is highly water-soluble and, therefore, even when the unreacted modifying monomer (A) remains in the aqueous dispersion, it can be easily removed in the concentration step or the coagulation/washing step.

While the modifying monomer (A) is incorporated into the produced polymer during the course of polymerization, the concentration of the modifying monomer (A) in the polymerization system is low, and the amount incorporated into the polymer is small. Accordingly, problems that the heat resistance of PTFE is impaired or PTFE is colored after sintering do not arise.

Examples of the hydrophilic group in the modifying monomer (A) include -NH₂, -PO₃M, -OPO₃M, -SO₃M, -OSO₃M, and - COOM, wherein M represents H, a metal atom, NR^{7y}₄, optionally substituted imidazolium, optionally substituted pyridinium, or optionally substituted phosphonium, wherein R^{7y} is H or an organic group and may be the same or different, and any two may be bonded to each other to form a ring. Among these, the hydrophilic group is preferably -SO₃M or -COOM. The organic group in R^{7y} is preferably an alkyl group. R^{7y} is preferably H or a C₁₋₁₀ organic group, more preferably H or a C₁₋₄ organic group, and even more preferably H or a C₁₋₄ alkyl group.

The metal atom may be a monovalent or divalent metal atom, such as an alkali metal (Group 1) or an alkaline earth metal (Group 2), and is preferably Na, K, or Li.

Examples of the "functional group capable of reacting by radical polymerization" in the modifying monomer (A) include a group having an ethylenically unsaturated bond such as a vinyl group and an allyl group. The group having an ethylenically unsaturated bond can be represented by the following formula:

CX^{e}X^{g}=CX^{f}R-

wherein X^{e}, X^{f}, and X^{g} are each independently F, Cl, H, CF₃, CF₂H, CFH₂, or CH₃; and R is a linking group. The linking group R may be the linking group R^{a}, which will be described below. Preferable examples include groups having an unsaturated bond, such as -CH=CH₂, -CF=CH₂, -CH=CF₂, -CF=CF₂, -CH₂-CH=CH₂, -CF₂-CF=CH₂, -CF₂-CF=CF₂, -(C=O)-CH=CH₂, -(C=O)-CF=CH₂, -(C=O)-CH=CF₂, -(C=O)-CF=CF₂, -(C=O)-C(CH₃)=CH₂, -(C=O)-C(CF₃)=CH₂, -(C=O)-C(CH₃)=CF₂, -(C=O)-C(CF₃)=CF₂, -O-CH₂-CH=CH₂, -O-CF₂-CF=CH₂, -O-CH₂-CH=CF₂, and -O-CF₂-CF=CF₂.

Since the modifying monomer (A) has a functional group capable of reaction by radical polymerization, it is conjectured that when used in the polymerization, the modifying monomer (A) reacts with a fluorine-containing monomer at the initial stage of the polymerization reaction and forms highly stable particles having a hydrophilic group derived from the modifying monomer (A). Accordingly, it is considered that the number of particles increases when the polymerization is performed in the presence of the modifying monomer (A).

The polymerization may be performed in the presence of one or more modifying monomers (A).

In the polymerization, the modifying monomer (A) may be a compound having an unsaturated bond.

The modifying monomer (A) is preferably a compound represented by general formula (4):

CXⁱX^{k}=CX^{j}R^{a}-(CZ¹Z²)ₖ-Y³ (4)

wherein Xⁱ, X^{j}, and X^{k} are each independently F, Cl, H, or CF₃; Y³ is a hydrophilic group; R^{a} is a linking group; Z¹ and Z² are each independently H, F, or CF₃; and k is 0 or 1.

Examples of the hydrophilic group include -NH₂, -PO₃M, - OPO₃M, -SO₃M, -OSO₃M, and -COOM, wherein M represents H, a metal atom, NR^{7y}₄, optionally substituted imidazolium, optionally substituted pyridinium, or optionally substituted phosphonium, wherein R^{7y} is H or an organic group, and may be the same or different, and any two may be bonded to each other to form a ring. Among these, the hydrophilic group is preferably -SO₃M or -COOM. The organic group in R^{7y} is preferably an alkyl group. R^{7y} is preferably H or a C₁₋₁₀ organic group, more preferably H or a C₁₋₄ organic group, and even more preferably H or a C₁₋₄ alkyl group. The metal atom may be a monovalent or divalent metal atom, such as an alkali metal (Group 1) or an alkaline earth metal (Group 2), and is preferably Na, K, or Li.

The use of the modifying monomer (A) makes it possible to obtain an aqueous dispersion having a smaller average primary particle size and superior stability. Also, the aspect ratio of the primary particles can be reduced.

R^{a} is a linking group. The "linking group" as used herein refers to a divalent linking group. The linking group may be a single bond and preferably contains at least one carbon atom, and the number of carbon atoms may be 2 or more, 4 or more, 8 or more, 10 or more, or 20 or more. The upper limit is not limited, and, for example, may be 100 or less, and may be 50 or less.

The linking group may be linear or branched, cyclic or acyclic, saturated or unsaturated, and substituted or unsubstituted, and, as desired, optionally contains one or more heteroatoms selected from the group consisting of sulfur, oxygen, and nitrogen, and, as desired, optionally contains one or more functional groups selected from the group consisting of ester, amide, sulfonamide, carbonyl, carbonate, urethane, urea, and carbamate. The linking group may be a group that does not contain a carbon atom and that is a catenary heteroatom such as oxygen, sulfur, or nitrogen.

R^{a} is preferably a catenary heteroatom such as oxygen, sulfur, or nitrogen, or a divalent organic group.

When R^{a} is a divalent organic group, a hydrogen atom bonded to a carbon atom may be replaced with halogen other than fluorine, such as chlorine, and R^{a} may or may not contain a double bond. Also, R^{a} may be linear or branched, and may be cyclic or acyclic. Also, R^{a} may contain a functional group (e.g., ester, ether, ketone, amine, or halide).

R^{a} may also be a fluorine-free divalent organic group or a partially fluorinated or perfluorinated divalent organic group.

R^{a} may be, for example, a hydrocarbon group in which no fluorine atom is bonded to a carbon atom, a hydrocarbon group in which some hydrogen atoms bonded to carbon atoms are replaced by fluorine atoms, a hydrocarbon group in which all hydrogen atoms bonded to carbon atoms are replaced by fluorine atoms, -(C=O)-, -(C=O)-O-, or a hydrocarbon group containing an ether bond, and these may contain an oxygen atom, may contain a double bond, and may contain a functional group.

R^{a} is preferably -(C=O)-, -(C=O)-O-, or a hydrocarbon group having 1 to 100 carbon atoms that optionally contains an ether bond and optionally contains a carbonyl group, wherein some or all of the hydrogen atoms bonded to the carbon atoms in the hydrocarbon group may be replaced by fluorine.

R^{a} is preferably at least one selected from -(CH₂)ₐ-, - (CF₂)ₐ-, -O-(CF₂)ₐ-, -(CF₂)ₐ-O-(CF₂)_{b}-, -O(CF₂)ₐ-O-(CF₂)_{b}-, - (CF₂)ₐ-[O-(CF₂)_{b}]_{c}-, -O(CF₂)ₐ-[O-(CF₂)_{b}]_{c}-, -[(CF₂)ₐ-O]_{b}-[(CF₂)_{c}-O]_{d}-, -O[(CF₂)ₐ-O]_{b}-[(CF₂)_{c}-O]_{d}-, -O-[CF₂CF(CF₃)O]ₐ-(CF₂)_{b}-, - (C=O)-, -(C=O)-O-, -(C=O)-(CH₂)ₐ-, -(C=O)-(CF₂)ₐ-, -(C=O)-O-(CH₂)ₐ-, -(C=O)-O-(CF₂)ₐ-, -(C=O)-[(CH₂)ₐ-O]_{b}-, -(C=O)-[(CF₂)ₐ-O]_{b}-, -(C=O)-O[(CH₂)ₐ-O]_{b}-, -(C=O)-O[(CF₂)ₐ-O]_{b}-, -(C=O)-O[(CH₂)ₐ-O]_{b}-(CH₂)_{c}-, -(C=O)-O[(CF₂)ₐ-O]_{b}-(CF₂)_{c}-, -(C=O)-(CH₂)ₐ-O-(CH₂)_{b}-, -(C=O)-(CF₂)ₐ-O-(CF₂)_{b}-, -(C=O)-O-(CH₂)ₐ-O-(CH₂)_{b}-, - (C=O)-O-(CF₂)ₐ-O-(CF₂)_{b}-, - (C=O)-O-C₆H₄-, and combinations thereof.

In the formulae, a, b, c, and d are each independently at least 1 or more. a, b, c and d may independently be 2 or more, 3 or more, 4 or more, 10 or more, or 20 or more. The upper limits of a, b, c, and d are, for example, 100.

Specific examples suitable for R^{a} include -CF₂-O-, -CF₂-O-CF₂-, -CF₂-O-CH₂-, -CF₂-O-CH₂CF₂-, -CF₂-O-CF₂CF₂-, -CF₂-O-CF₂CH₂-, -CF₂-O-CF₂CF₂CH₂-, -CF₂-O-CF(CF₃)-, -CF₂-O-CF(CF₃)CF₂-, - CF₂-O-CF(CF₃)CF₂-O-, -CF₂-O-CF(CF₃)CH₂-, -(C=O)-, -(C=O)-O-, - (C=O)-(CH₂)-, -(C=O)-(CF₂)-, -(C=O)-O-(CH₂)-, -(C=O)-O-(CF₂)-, - (C=O)-[(CH₂)₂-O]ₙ-, -(C=O)-[(CF₂)₂-O]ₙ-, -(C=O)-O[(CH₂)₂-O]ₙ-, - (C=O)-O[(CF₂)₂-O]ₙ-, -(C=O)-O[(CH₂)₂-O]ₙ-(CH₂)-, -(C=O)-O[(CF₂)₂-O]ₙ-(CF₂)-, -(C=O)-(CH₂)₂-O-(CH₂)-, -(C=O)-(CF₂)₂-O-(CF₂)-, - (C=O)-O-(CH₂)₂-O-(CH₂)-, -(C=O)-O-(CF₂)₂-O-(CF₂)-, and -(C=O)-O-C₆H₄-. In particular, specifically R^{a} is preferably -CF₂-O-, - CF₂-O-CF₂-, -CF₂-O-CF₂CF₂-, -CF₂-O-CF(CF₃)-, -CF₂-O-CF(CF₃)CF₂-, - CF₂-O-CF(CF₃)CF₂-O-, -(C=O)-, -(C=O) -O-, -(C=O)-(CH₂)-, -(C=O)-O-(CH₂)-, -(C=O)-O[(CH₂)₂-O]ₙ-, -(C=O)-O[(CH₂)₂-O]ₙ-(CH₂)-, - (C=O)-(CH₂)₂-O-(CH₂)-, or -(C=O)-O-C₆H₄-.

In the formulae, n is an integer of 1 to 10.

-R^{a}-(CZ¹Z²)ₖ- in general formula (4) is preferably -CF₂-O-CF₂-, -CF₂-O-CF(CF₃)-, -CF₂-O-C(CF₃)₂-, -CF₂-O-CF₂-CF₂-, -CF₂-O-CF₂-CF(CF₃)-, -CF₂-O-CF₂-C(CF₃)₂-, -CF₂-O-CF₂CF₂-CF₂-, -CF₂-O-CF₂CF₂-CF(CF₃)-, -CF₂-O-CF₂CF₂-C(CF₃)₂-, -CF₂-O-CF(CF₃)-CF₂-, - CF₂-O-CF(CF₃)-CF(CF₃)-, -CF₂-O-CF(CF₃)-C(CF₃)₂-, -CF₂-O-CF(CF₃) CF₂-CF₂-, -CF₂-O-CF(CF₃)CF₂-CF(CF₃)-, -CF₂-O-CF(CF₃)CF₂-C(CF₃)₂-, -CF₂-O-CF(CF₃)CF₂-O-CF₂-, -CF₂-O-CF(CF₃)CF₂-O-CF(CF₃)-, -CF₂-O-CF(CF₃)CF₂-O-C(CF₃)₂-, -(C=O)-, -(C=O)-O-, -(C=O)-(CH₂)-,-(C=O)-(CF₂)-, -(C=O)-O-(CH₂)-, -(C=O)-O-(CF₂)-, -(C=O)-[(CH₂)₂-O]ₙ-(CH₂)-, -(C=O)-[(CF₂)₂-O]ₙ-(CF₂)-, -(C=O)-[(CH₂)₂-O]ₙ-(CH₂)-(CH₂)-, -(C=O)-[(CF₂)₂-O]ₙ-(CF₂)-(CF₂)-, -(C=O)-O[(CH₂)₂-O]ₙ-(CF₂)-, -(C=O)-O[(CH₂)₂-O]ₙ-(CH₂)-(CH₂)-, -(C=O)-O[(CF₂)₂-O]ₙ-(CF₂)-, -(C=O)-O[(CF₂)₂-O]ₙ-(CF₂)-(CF₂)-, -(C=O)-(CH₂)₂-O-(CH₂)-(CH₂)-, -(C=O)-(CF₂)₂-O-(CF₂)-(CF₂)-, -(C=O)-O-(CH₂)₂-O-(CH₂)-(CH₂)-, -(C=O)-O-(CF₂)₂-O-(CF₂)-(CF₂)-, -(C=O)-O-(CH₂)₂-O-(CH₂)-C(CF₃)₂-, -(C=O)-O-(CF₂)₂-O-(CF₂)-C(CF₃)₂-, or -(C=O)-O-C₆H₄-C(CF₃)₂-, and is more preferably -CF₂-O-CF(CF₃)-, -CF₂-O-CF₂-CF(CF₃)-, -CF₂-O-CF₂CF₂-CF(CF₃)-, -CF₂-O-CF(CF₃)-CF(CF₃)-, -CF₂-O-CF(CF₃)CF₂-CF(CF₃)-, -CF₂-O-CF(CF₃)CF₂-O-CF(CF₃)-, -(C=O) -,-(C=O)-O-(CH₂)-, -(C=O)-O-(CH₂)-(CH₂)-, -(C=O)-O[(CH₂)₂-O]ₙ-(CH₂)-(CH₂)-, -(C=O)-O-(CH₂)₂-O-(CH₂)-C(CF₃)₂-, or -(C=O)-O-C₆H₄-C(CF₃)₂-.

In the formulae, n is an integer of 1 to 10.

Specific examples of the compound represented by general formula (4) include compounds represented by the following formulae: 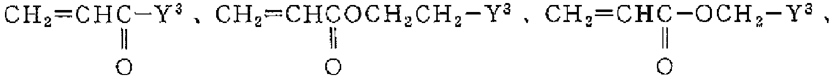 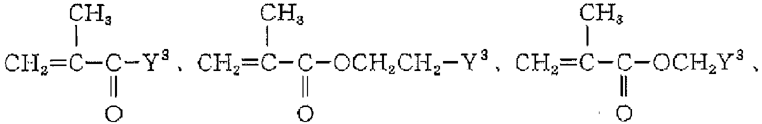 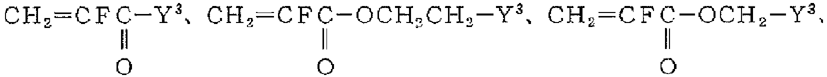 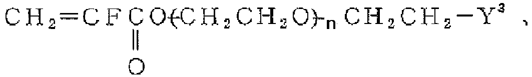 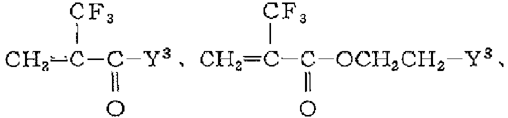 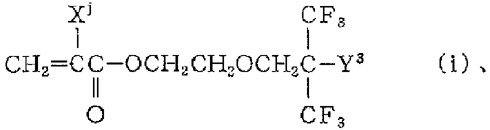 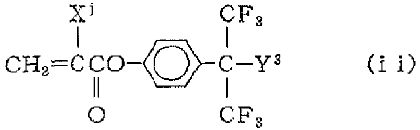 wherein X^{j} and Y³ are as described above; and n is an integer of 1 to 10.

R^{a} is preferably a divalent group represented by general formula (r1):

-(C=O)ₕ-(O)ᵢ-CF₂-O-(CX⁶₂)ₑ-{O-CF(CF₃)}_{f}-(O)_{g}- (r1)

(wherein X⁶ is each independently H, F, or CF₃, e is an integer of 0 to 3, f is an integer of 0 to 3, g is 0 or 1, h is 0 or 1, and i is 0 or 1), and is also preferably a divalent group represented by general formula (r2):

-(C=O)ₕ-(O)ᵢ-CF₂-O-(CX⁷₂)ₑ-(O)_{g}- (r2)

(wherein X⁷ is each independently H, F, or CF₃; e is an integer of 0 to 3; g is 0 or 1; h is 0 or 1; and i is 0 or 1).

-R^{a}-(CZ¹Z²)ₖ- in general formula (4) is also preferably a divalent group represented by the following formula (t1):

-(C=O)ₕ-(O)ᵢ-CF₂-O-(CX⁶₂)ₑ-{O-CF(CF₃)}_{f}-(O)_{g}-CZ¹Z²- (t1)

(wherein X⁶ is each independently H, F, or CF₃, e is an integer of 0 to 3, f is an integer of 0 to 3, g is 0 or 1, h is 0 or 1, i is 0 or 1, and Z¹ and Z² are each independently F or CF₃), and, more preferably, in formula (t1), one of Z¹ and Z² is F, and the other is CF₃.

Also, in general formula (4), -R^{a}-(CZ¹Z²)ₖ- is preferably a divalent group represented by the following formula (t2):

-(C=O)ₕ-(O)₁-CF₂-O-(CX⁷₂)ₑ-(O)_{g}-CZ¹Z²- (t2)

(wherein X⁷ is each independently H, F, or CF₃, e is an integer of 0 to 3, g is 0 or 1, h is 0 or 1, i is 0 or 1, and Z¹ and Z² are each independently F or CF₃), and, more preferably, in formula (t2), one of Z¹ and Z² is F, and the other is CF₃.

The compound represented by general formula (4) also preferably has a C-F bond and does not have a C-H bond in the portion excluding the hydrophilic group (Y³). That is, in general formula (A), preferably, Xⁱ, X^{j}, and X^{k} are all F, and R^{a} is a perfluoroalkylene group having one or more carbon atoms. The perfluoroalkylene group may be either linear or branched, may be either cyclic or acyclic, and may contain at least one catenary heteroatom. The perfluoroalkylene group may have 2 to 20 carbon atoms or 4 to 18 carbon atoms.

The compound represented by general formula (4) may be partially fluorinated. That is, the compound represented by general formula (4) also preferably has at least one hydrogen atom bonded to a carbon atom and at least one fluorine atom bonded to a carbon atom, in the portion excluding the hydrophilic group (Y³).

The compound represented by general formula (4) is also preferably a compound represented by the following formula (4a):

CF₂=CF-O-Rf⁰-Y³ (4a)

wherein Y³ is a hydrophilic group; and Rf⁰ is a perfluorinated divalent linking group which is perfluorinated and may be a linear or branched, cyclic or acyclic, saturated or unsaturated, substituted or unsubstituted, and optionally contains one or more heteroatoms selected from the group consisting of sulfur, oxygen, and nitrogen.

The compound represented by general formula (4) is also preferably a compound represented by the following formula (4b):

CH₂=CH-O-Rf⁰-Y³ (4b)

wherein Y³ is a hydrophilic group; and Rf⁰ is a perfluorinated divalent linking group as defined in formula (4a).

In a preferable embodiment, Y³ in general formula (4) is -OSO₃M. Examples of the compound represented by general formula (4) when Y³ is -OSO₃M include CF₂=CF(OCF₂CF₂CH₂OSO₃M), CF₂=CF(O(CF₂)₄CH₂OSO₃M), CF₂=CF(OCF₂CF(CF₃)CH₂OSO₃M), CF₂=CF(OCF₂CF(CF₃)OCF₂CF₂CH₂OSO₃M), CH₂=CH((CF₂)_{4C}H₂OSO₃M), CF₂=CF(OCF₂CF₂SO₂N(CH₃)CH₂CH₂OSO₃M), CH₂=CH(CF₂CF₂CH₂OSO₃M), and CF₂=CF(OCF₂CF₂CF₂CF₂SO₂N(CH₃)CH₂CH₂OSO₃M). In the above formulae, M is as described above.

In a preferable embodiment, Y³ in general formula (4) is -SO₃M. Examples of the compound represented by general formula (4) when Y³ is -SO₃M include CF₂=CF(OCF₂CF₂SO₃M), CF₂=CF(O(CF₂)₄SO₃M), CF₂=CF(OCF₂CF(CF₃)SO₃M), CF₂=CF(OCF₂CF(CF₃)OCF₂CF₂SO₃M), CH₂=CH(CF₂CF₂SO₃M), CF₂=CF(OCF₂CF(CF₃)OCF₂CF₂CF₂CF₂SO₃M), CH₂=CH((CF₂)₄SO₃M), and CH₂=CH((CF₂)₃SO₃M). In the above formulae, M is as described above.

In a preferable embodiment, Y³ in the general formula (4) is -COOM. Examples of the compound represented by general formula (4) when Y³ is -COOM include CF₂=CF(OCF₂CF₂COOM), CF₂=CF(OCF₂CF₂CF₂COOM), CF₂=CF(O(CF₂)₅COOM), CF₂=CF(OCF₂CF(CF₃)COOM), CF₂=CF(OCF₂CF(CF₃)O(CF₂)ₙCOOM) (n is greater than 1), CH₂=CH(CF₂CF₂COOM), CH₂=CH((CF₂)₄COOM), CH₂=CH((CF₂)₃COOM), CF₂=CF(OCF₂CF₂SO₂NR'CH₂COOM), CF₂=CF(O(CF₂)₄SO₂NR' CH₂COOM), CF₂=CF(OCF₂CF(CF₃)SO₂NR'CH₂COOM), CF₂=CF(OCF₂CF(CF₃)OCF_{2C}F₂SO₂NR'CH₂COOM), CH₂=CH(CF₂CF₂SO₂NR'CH₂COOM), CF₂=CF(OCF₂CF(CF₃)OCF₂CF₂CF₂CF₂SO₂NR'CH₂COOM), CH₂=CH((CF₂)₄SO₂NR'CH₂COOM), and CH₂=CH((CF₂)₃SO₂NR'CH₂COOM). In the above formulae, R' is H or a C₁₋₄ alkyl group, and M is as described above.

In a preferable embodiment, Y³ in general formula (4) is -OPO₃M or -OP(O)(OM)₂. Examples of the compound represented by general formula (4) when Y³ is -OPO₃M or -OP(O)(OM)₂ include CF₂=CF(OCF₂CF₂CH₂OP(O)(OM)₂), CF₂=CF(O(CF₂)₄CH₂OP(O)(OM)₂), CF₂=CF(OCF₂CF(CF₃)CH₂OP(O)(OM)₂), CF₂=CF(OCF₂CF(CF₃)OCF₂CF₂CH₂OP(O)(OM)₂), CF₂=CF(OCF₂CF₂SO₂N(CH₃)CH₂CH₂OP(O)(OM)₂), CF₂=CF(OCF₂CF₂CF₂CF₂SO₂N(CH₃)CH₂CH₂OP(O)(OM)₂), CH₂=CH(CF₂CF₂CH₂OP(O)(OM)₂, CH₂=CH((CF₂)₄CH₂OP(O)(OM)₂), and CH₂=CH((CF₂)₃CH₂OP(O)(OM)₂). In the above formulae, M is as described above.

In a preferable embodiment, Y³ in the general formula (4) is -PO₃M or -P(O)(OM)₂. Examples of the compound represented by general formula (4) when Y³ is -PO₃M or-P(O)(OM)₂ include CF₂=CF(OCF₂CF₂P(O)(OM)₂), CF₂=CF(O(CF₂)₄P(O)(OM)₂), CF₂=CF(OCF₂CF(CF₃)P(O)(OM)₂), CF₂=CF(OCF₂CF(CF₃)OCF₂CF₂P(O)(OM)₂), CH₂=CH(CF₂CF₂P(O)(OM)₂), CH₂=CH((CF₂)₄P(O)(OM)₂), and CH₂=CH((CF₂)₃P(O)(OM)₂), wherein M is as described above.

The compound represented by general formula (4) is preferably at least one selected from the group consisting of: a compound represented by general formula (5):

CX₂=CY(-CZ₂-O-Rf-Y³) (5)

wherein X is the same or different and is -H or -F; Y is -H,-F, an alkyl group, or a fluorine-containing alkyl group; Z is the same or different and is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and Y³ is as described above; a compound represented by general formula (6):

CX₂=CY(-O-Rf-Y³) (6)

wherein X is the same or different and is -H or -F; Y is -H,-F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and Y³ is as described above; and a compound represented by general formula (7):

CX₂=CY(-Rf-Y³) (7)

wherein X is the same or different and is -H or -F; Y is -H,-F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and Y³ is as described above.

Note that the fluorine-containing alkylene group having 2 to 100 carbon atoms and having an ether bond described above is an alkylene group that does not include a structure in which an oxygen atom is an end and that contains an ether bond between carbon atoms.

In general formula (5), each X is -H or -F. X may be both -F, or at least one may be -H. For example, one may be -F and the other may be -H, or both may be -H.

In general formula (5), Y is -H, -F, an alkyl group, or a fluorine-containing alkyl group.

The alkyl group is an alkyl group not containing a fluorine atom, and may have one or more carbon atoms. The number of carbon atoms of the alkyl group is preferably 6 or less, more preferably 4 or less, and even more preferably 3 or less.

The fluorine-containing alkyl group is an alkyl group containing at least one fluorine atom, and may have one or more carbon atoms. The number of carbon atoms of the fluorine-containing alkyl group is preferably 6 or less, more preferably 4 or less, and even more preferably 3 or less.

Y is preferably -H, -F, or -CF₃, and more preferably -F.

In general formula (5), Z is the same or different and is -H, -F, an alkyl group, or a fluoroalkyl group.

The alkyl group is an alkyl group not containing a fluorine atom, and may have one or more carbon atoms. The number of carbon atoms of the alkyl group is preferably 6 or less, more preferably 4 or less, and even more preferably 3 or less.

The fluorine-containing alkyl group is an alkyl group containing at least one fluorine atom, and may have one or more carbon atoms. The number of carbon atoms of the fluorine-containing alkyl group is preferably 6 or less, more preferably 4 or less, and even more preferably 3 or less.

Z is preferably -H, -F, or -CF₃, and more preferably -F.

In general formula (5), at least one of X, Y, and Z preferably contains a fluorine atom. For example, X, Y, and Z may be -H, -F, and -F, respectively.

In general formula (5), Rf is a fluorine-containing alkylene group having 1 to 40 carbon atoms or a fluorine-containing alkylene group having 2 to 100 carbon atoms and having an ether bond.

The fluorine-containing alkylene group preferably has two or more carbon atoms. Also, the fluorine-containing alkylene group preferably has 30 or fewer carbon atoms, more preferably 20 or fewer carbon atoms, and even more preferably 10 or fewer carbon atoms. Examples of the fluorine-containing alkylene group include -CF₂-, -CH₂CF₂-, -CF₂CF₂-, -CF₂CH₂-, -CF₂CF₂CH₂-,-CF(CF₃)-, -CF(CF₃)CF₂-, and -CF(CF₃)CH₂-. The fluorine-containing alkylene group is preferably a perfluoroalkylene group.

The fluorine-containing alkylene group having an ether bond preferably has three or more carbon atoms. The fluorine-containing alkylene group having an ether bond preferably has 60 or fewer carbon atoms, more preferably 30 or fewer carbon atoms, and even more preferably 12 or fewer carbon atoms.

The fluorine-containing alkylene group having an ether bond is also preferably a divalent group represented by the following formula: 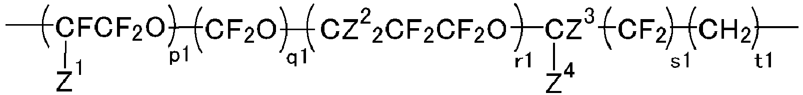 wherein Z¹ is F or CF₃; Z² and Z³ are each H or F; Z⁴ is H, F, or CF₃; p1 + q1 + r1 is an integer of 1 to 10; s1 is 0 or 1; and t1 is an integer of 0 to 5.

Specific examples of the fluorine-containing alkylene group having an ether bond include -CF(CF₃)CF₂-O-CF(CF₃)-,-(CF(CF₃)CF₂-O)ₙ-CF(CF₃)- (where n is an integer of 1 to 10),-CF(CF₃)CF₂-O-CF(CF₃)CH₂-, -(CF(CF₃)CF₂-O)ₙ-CF(CF₃)CH₂- (where n is an integer of 1 to 10), -CH₂CF₂CF₂O-CH₂CF₂CH₂-, -CF₂CF₂CF₂O-CF₂CF₂-, -CF₂CF₂CF₂O-CF₂CF₂CH₂-, -CF₂CF₂O-CF₂-, and -CF₂CF₂O-CF₂CH₂-. The fluorine-containing alkylene group having an ether bond is preferably a perfluoroalkylene group.

In general formula (5), Y³ is preferably -COOM, -SO₃M, or -OSO₃M, wherein M is H, a metal atom, NR^{7y}₄, optionally substituted imidazolium, optionally substituted pyridinium, or optionally substituted phosphonium, wherein R^{7y} is H or an organic group, and may be the same or different, and any two may be bonded to each other to form a ring.

The organic group in R^{7y} is preferably an alkyl group.

R^{7y} is preferably H or a C₁₋₁₀ organic group, more preferably H or a C₁₋₄ organic group, and even more preferably H or a C₁₋₄ alkyl group.

The metal atom may be an alkali metal (Group 1), an alkaline earth metal (Group 2), or the like, and is preferably Na, K, or Li.

M is preferably -H, a metal atom, or -NR⁷₄, more preferably -H, an alkali metal (Group 1), an alkaline earth metal (Group 2), or -NR⁷₄, even more preferably -H, -Na, -K,-Li, or -NH₄, yet more preferably -H, -Na, -K, or -NH₄, particularly preferably -H, -Na or -NH₄, and most preferably -H, or -NH₄.

Y³ is preferably -COOM or -SO₃M, and more preferably -COOM.

The compound represented by general formula (5) is preferably a compound (5a) represented by general formula (5a):

CH₂=CF(-CF₂-O-Rf-Y³) (5a)

wherein Rf and Y³ are as described above.

Specific examples of the compound represented by general formula (5a) include compounds represented by the following formula: 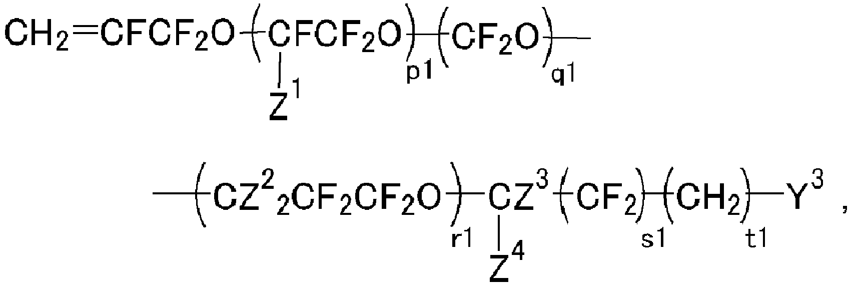 wherein Z¹ is F or CF₃; Z² and Z³ are each H or F; Z⁴ is H, F, or CF₃; p1+q1+r1 is an integer of 0 to 10; s1 is 0 or 1; t1 is an integer of 0 to 5; and Y³ is as described above, provided that when Z³ and Z⁴ are both H, p1 + q1 + r1 + s1 is not 0. More specifically, preferable examples include 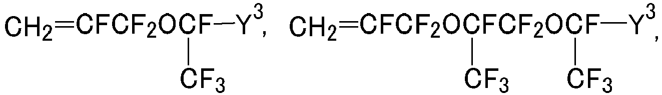 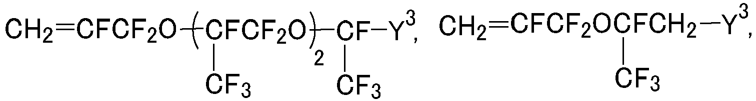 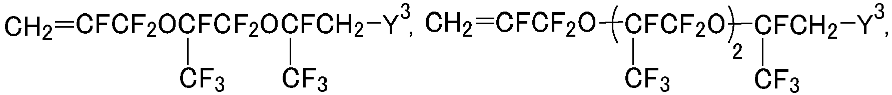 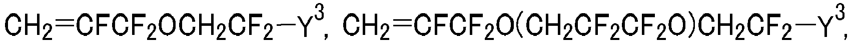 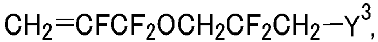 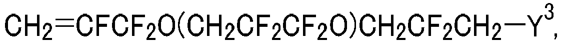 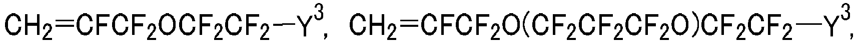 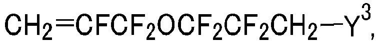 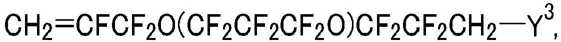 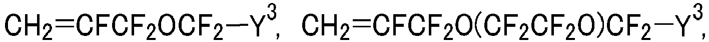 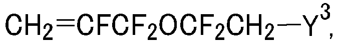 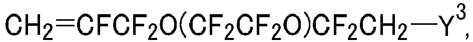 and, in particular, 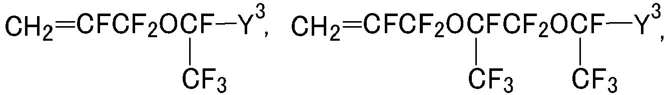 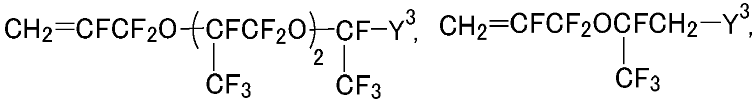 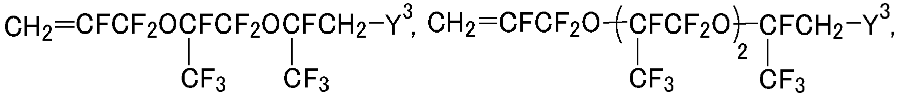 are preferable.

In the compound represented by general formula (5a), Y³ in formula (5a) is preferably -COOM. In particular, the compound represented by general formula (5a) is preferably at least one selected from the group consisting of CH₂=CFCF₂OCF(CF₃)COOM and CH₂=CFCF₂OCF(CF₃)CF₂OCF(CF₃)COOM (wherein M is as defined above), and more preferably CH₂=CFCF₂OCF(CF₃)COOM.

The compound represented by general formula (5) is preferably a compound (5b) represented by general formula (5b):

CX²₂=CFCF₂-O-(CF(CF₃)CF₂O)ₙ₅-CF(CF₃)-Y³ (5b)

wherein each X² is the same and represents F or H; n5 represents 0 or an integer of 1 to 10; and Y³ is as defined above.

In formula (5b), n5 is preferably 0 or an integer of 1 to 5, more preferably 0, 1, or 2, and even more preferably 0 or 1 from the viewpoint of stability of the resulting aqueous dispersion. Y³ is preferably -COOM from the viewpoint of obtaining appropriate water solubility and stability of the aqueous dispersion, and M is preferably H or NH₄ from the viewpoint of being less likely to remain as impurities and improving the heat resistance of the resulting formed article.

Examples of the compound represented by formula (5b) include CH₂=CFCF₂OCF(CF₃)COOM and CH₂=CFCF₂OCF(CF₃)CF₂OCF(CF₃)COOM, wherein M is as defined above.

Examples of the compound represented by general formula (5) further include a compound represented by general formula (5c):

CF₂=CFCF₂-O-Rf-Y³ (5c)

wherein Rf and Y³ are as described above.

More specific examples include: 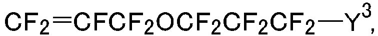 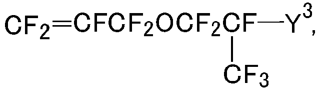 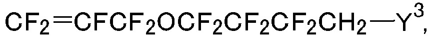 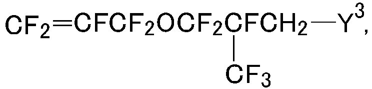 and the like.

In general formula (6), each X is -H or -F. X may be both -F, or at least one may be -H. For example, one may be -F and the other may be -H, or both may be -H.

In general formula (6), Y is -H, -F, an alkyl group, or a fluorine-containing alkyl group.

The alkyl group is an alkyl group not containing a fluorine atom, and may have one or more carbon atoms. The number of carbon atoms of the alkyl group is preferably 6 or less, more preferably 4 or less, and even more preferably 3 or less.

The fluorine-containing alkyl group is an alkyl group containing at least one fluorine atom, and may have one or more carbon atoms. The number of carbon atoms of the fluorine-containing alkyl group is preferably 6 or less, more preferably 4 or less, and even more preferably 3 or less.

Y is preferably -H, -F, or -CF₃, and more preferably -F.

In general formula (6), at least one of X and Y preferably contains a fluorine atom. For example, X, Y, and Z may be -H, -F, and -F, respectively.

In general formula (6), Rf is a fluorine-containing alkylene group having 1 to 40 carbon atoms or a fluorine-containing alkylene group having 2 to 100 carbon atoms and having an ether bond.

The fluorine-containing alkylene group preferably has two or more carbon atoms. Also, the fluorine-containing alkylene group preferably has 30 or fewer carbon atoms, more preferably 20 or fewer carbon atoms, and even more preferably 10 or fewer carbon atoms. Examples of the fluorine-containing alkylene group include -CF₂-, -CH₂CF₂-, -CF₂CF₂-, -CF₂CH₂-, -CF₂CF₂CH₂-,-CF(CF₃)-, -CF(CF₃)CF₂-, and -CF(CF₃)CH₂-. The fluorine-containing alkylene group is preferably a perfluoroalkylene group.

In general formula (6), Y³ is preferably -COOM, -SO₃M, or -OSO₃M, wherein M is H, a metal atom, NR^{7y}₄, optionally substituted imidazolium, optionally substituted pyridinium, or optionally substituted phosphonium, wherein R^{7y} is H or an organic group, and may be the same or different, and any two may be bonded to each other to form a ring.

The organic group of R^{7y} is preferably an alkyl group. R^{7y} is preferably H or a C₁₋₁₀ organic group, more preferably H or a C₁₋₄ organic group, and even more preferably H or a C₁₋₄ alkyl group.

The metal atom may be an alkali metal (Group 1), an alkaline earth metal (Group 2), or the like, and is preferably Na, K, or Li.

M is preferably -H, a metal atom, or -NR⁷₄, more preferably -H, an alkali metal (Group 1), an alkaline earth metal (Group 2), or -NR⁷₄, even more preferably -H, -Na, -K,-Li, or -NH₄, yet more preferably -H, -Na, -K, or -NH₄, particularly preferably -H, -Na or -NH₄, and most preferably -H, or -NH₄.

Y³ is preferably -COOM or -SO₃M, and more preferably -COOM.

The compound represented by general formula (6) is preferably at least one selected from the group consisting of compounds represented by general formulae (6a), (6b), (6c), (6d), and (6e):

CF₂=CF-O-(CF₂)ₙ₁-Y³ (6a)

wherein n1 represents an integer of 1 to 10, and Y³ is as defined above;

CF₂=CF-O-(CF₂C(CF₃)F)ₙ₂-Y³ (6b)

wherein n2 represents an integer of 1 to 5, and Y³ is as defined above;

CF₂=CF-O-(CFX¹)ₙ₃-Y³ (6c)

wherein X¹ represents F or CF₃; n3 represents an integer of 1 to 10; and Y³ is as defined above;

CF₂=CF-O-(CF₂CFX¹O)ₙ₄-(CF₂)ₙ₆-Y³ (6d)

wherein n4 represents an integer of 1 to 10, n6 represents an integer of 1 to 3, and Y³ and X¹ are as defined above; and

CF₂=CF-O-(CF₂CF₂CFX¹O)ₙ₅-CF₂CF₂CF₂-Y³ (6e)

wherein n5 represents an integer of 0 to 10, and Y³ and X¹ are as defined above.

In formula (6a), n1 is preferably an integer of 5 or less, and more preferably an integer of 2 or less. Y³ is preferably -COOM or -SO₃M from the viewpoint of obtaining appropriate water solubility and stability of the aqueous dispersion, and M is preferably H or NH₄ from the viewpoint of being less likely to remain as impurities and improving the heat resistance of the resulting formed article.

Examples of the compound represented by formula (6a) include CF₂=CF-O-CF₂COOM, CF₂=CF(OCF₂CF₂COOM), CF₂=CF(OCF₂CF₂CF₂COOM), CF₂=CF-O-CF₂SO₃M, CF₂=CF(OCF₂CF₂SO₃M), and CF₂=CF(OCF₂CF₂CF₂SO₃M), wherein M is as defined above.

In formula (6b), n2 is preferably an integer of 3 or less from the viewpoint of stability of the resulting aqueous dispersion, Y³ is preferably -COOM or -SO₃M from the viewpoint of obtaining appropriate water solubility and stability of the aqueous dispersion, and M is preferably H or NH₄ from the viewpoint of being less likely to remain as impurities and improving the heat resistance of the resulting formed article.

In formula (6c), n3 is preferably an integer of 5 or less from the viewpoint of water solubility, Y³ is preferably-COOM or -SO₃M from the viewpoint of obtaining appropriate water solubility and stability of the aqueous dispersion, and M is preferably H or NH₄ from the viewpoint of improving dispersion stability.

In formula (6d), X¹ is preferably -CF₃ from the viewpoint of stability of the aqueous dispersion, n4 is preferably an integer of 5 or less from the viewpoint of water solubility, Y³ is preferably -COOM or -SO₃M from the viewpoint of obtaining appropriate water solubility and stability of the aqueous dispersion, and M is preferably H or NH₄.

Examples of the compound represented by formula (6d) include CF₂=CFOCF₂CF(CF₃)OCF₂CF₂COOM, CF₂=CFOCF₂CF(CF₃)OCF₂COOM, CF₂=CFOCF₂CF(CF₃)OCF₂CF₂CF₂COOM, CF₂=CFOCF₂CF(CF₃)OCF₂CF₂SO₃M, CF₂=CFOCF₂CF(CF₃)OCF₂SO₃M, and CF₂=CFOCF₂CF(CF₃)OCF₂CF₂CF₂SO₃M, wherein M represents H, NH₄, or an alkali metal.

In general formula (6e), n5 is preferably an integer of 5 or less from the viewpoint of water solubility, Y³ is preferably -COOM or -SO₃M from the viewpoint of obtaining appropriate water solubility and stability of the aqueous dispersion, and M is preferably H or NH₄.

Examples of the compound represented by general formula (6e) include CF₂=CFOCF₂CF₂CF₂COOM and CF₂=CFOCF₂CF₂CF₂SO₃M, wherein M represents H, NH₄, or an alkali metal.

In general formula (7), Rf is preferably a fluorine-containing alkylene group having 1 to 40 carbon atoms. In general formula (7), at least one of X and Y preferably contains a fluorine atom.

The compound represented by general formula (7) is preferably at least one selected from the group consisting of a compound represented by general formula (7a):

CF₂=CF-(CF₂)ₙ₁-Y³ (7a)

wherein n1 represents an integer of 1 to 10; and Y³ is as defined above; and a compound represented by general formula (7b):

CF₂=CF-(CF₂C(CF₃)F)ₙ₂-Y³ (7b)

wherein n2 represents an integer of 1 to 5; and Y³ is as defined above.

Y³ is preferably -SO₃M or -COOM, and M is preferably H, a metal atom, NR^{7y}₄, optionally substituted imidazolium, optionally substituted pyridinium, or optionally substituted phosphonium. R^{7y} represents H or an organic group.

In formula (7a), n1 is preferably an integer of 5 or less, and more preferably an integer of 2 or less. Y³ is preferably -COOM or -SO₃M from the viewpoint of obtaining appropriate water solubility and stability of the aqueous dispersion, and M is preferably H or NH₄ from the viewpoint of being less likely to remain as impurities and improving the heat resistance of the resulting formed article.
Examples of the compound represented by formula (7a) include CF₂=CFCF₂COOM and CF₂=CFCF₂SO₃M, wherein M is as defined above.

In formula (7b), n2 is preferably an integer of 3 or less from the viewpoint of stability of the resulting aqueous dispersion, Y³ is preferably -COOM or -SO₃M from the viewpoint of obtaining appropriate water solubility and stability of the aqueous dispersion, and M is preferably H or NH₄ from the viewpoint of being less likely to remain as impurities and improving the heat resistance of the resulting formed article.

The modifying monomer preferably includes the modifying monomer (A), preferably includes at least one selected from the group consisting of compounds represented by general formula (5a), general formula (5c), general formula (6a), general formula (6b), general formula (6c), and general formula (6d), and more preferably includes the compound represented by general formula (5a) or general formula (5c).

When the modifying monomer used is the modifying monomer (A), the content of the modifying monomer (A) unit is preferably in the range of 0.00001 to 1.0% by mass based on all polymerized units in the TFE polymer (PTFE). The lower limit is more preferably 0.0001% by mass, more preferably 0.0005% by mass, even more preferably 0.001% by mass, and yet more preferably 0.005% by mass. The upper limit is, in ascending order of preference, 0.90% by mass, 0.50% by mass, 0.40% by mass, 0.30% by mass, 0.20% by mass, 0.15% by mass, 0.10% by mass, 0.08% by mass, 0.05% by mass, and 0.01% by mass.

Low molecular weight PTFE may have a carboxyl group. The carboxyl group is introduced into the molecular chain terminal by, for example, using a water-soluble radical polymerization initiator such as water-soluble peroxide as a polymerization initiator when polymerizing TFE. On the other hand, in suspension polymerization or the like, an oil-soluble radical polymerization initiator is often used, and when an oil-soluble radical polymerization initiator is used, a carboxyl group is not introduced into the molecular chain. Low molecular weight PTFE preferably has a carboxyl group at the molecular terminal. Having a carboxyl group, low molecular weight PTFE further improves the dispersibility of the powder in other materials.

The number of carboxyl groups per 10⁶ carbon atoms in the main chain of low molecular weight PTFE is preferably 29 or less. The number of functional groups per 10⁶ carbon atoms in the main chain of low molecular weight polytetrafluoroethylene is preferably 25 or less.

The number of carboxyl groups can be measured by the method for analyzing terminal groups described in Japanese Patent Laid-Open No. 4-20507. Specifically, the powder containing particles of low molecular weight PTFE is preliminary formed by hand-pressing into a film having a thickness of about 0.1 mm. The formed film is subjected to infrared absorption spectroscopy. PTFE having the terminal completely fluorinated that is produced by bringing PTFE into contact with fluorine gas is also subjected to infrared absorption spectroscopy, and the number of terminal carboxyl groups is calculated from the difference spectrum between the PTFE samples using the following expression: Number of carboxyl groups (per 106 carbon atoms) = (l × K)/t
- I:: Absorbance
- K:: Correction factor
- t:: Thickness of film (mm)

The absorption frequency of the carboxyl group is 3,560 cm⁻¹, and the correction factor is 440.

The powder of the present disclosure can be suitably used in a molding material, an ink, a cosmetic, a coating material, a grease, a component of office automation equipment, an additive for modifying toners, an additive for plating solutions, or the like. Examples of the molding material include engineering plastics such as polyoxybenzoyl polyester, polyimide, polyamide, polyamide-imide, polyacetal, polycarbonate, and polyphenylene sulfide. The powder of the present disclosure is particularly suitable as a grease thickening agent.

The powder of the present disclosure can be used as additives for molding materials, for example, for improving the non-stickiness and sliding property of copier rollers, for use in improving the texture of molded articles of engineering plastics, such as surface sheets of furniture, dashboards of automobiles, and covers of home appliances, and for use in improving the lubricity and abrasion resistance of machine elements that generate mechanical friction, such as light-load bearings, gears, cams, buttons of push-button telephones, movie projectors, camera components, and sliding materials.

The powder of the present disclosure can be used as an additive for a coating material for the purpose of improving the lubricity of varnish or paint. The powder of the present disclosure can be used as an additive for cosmetics for the purpose of improving the lubricity of cosmetics such as foundation and the like.

The powder of the present disclosure is also suitable for use in improving the oil-repellency or water-repellency of wax or the like, or in improving the lubricity of grease or toner.

The powder of the present disclosure can be used as an electrode binder for secondary batteries and fuel cells, a hardness adjuster for electrode binders, a water-repellent for electrode surfaces, and the like.

The powder of the present disclosure and lubricating oil can be used to prepare grease. The grease contains the powder of the present disclosure and lubricating oil, accordingly the powder of the present disclosure is uniformly and stably dispersed in the lubricating oil, and the grease has excellent properties with respect to load-bearing capacity, electrical insulation, low moisture absorption, and the like.

The lubricating oil (base oil) may be mineral oil or synthetic oil. Examples of the lubricating oil (base oil) include paraffinic or naphthenic mineral oil, and synthetic oil such as synthetic hydrocarbon oil, ester oil, fluorinated oil, or silicone oil. Fluorinated oil is preferable from the viewpoint of heat resistance. Examples of the fluorinated oil include perfluoropolyether oil and a low polymer of trifluorochloroethylene. The low polymer of trifluorochloroethylene may have a weight average molecular weight of 500 to 1,200.

The grease may further contain a thickener. Examples of the thickener include metal soap, composite metal soap, bentonite, phthalocyanine, silica gel, urea compounds, urea-urethane compounds, urethane compounds, and imide compounds. Examples of the metal soap include sodium soap, calcium soap, aluminum soap, and lithium soap. Examples of the urea compounds, urea-urethane compounds, and urethane compounds include diurea compounds, triurea compounds, tetraurea compounds, other polyurea compounds, urea-urethane compounds, diurethane compounds, and mixtures thereof.

The grease preferably contains the powder of the present disclosure in an amount of 0.1 to 50% by mass, more preferably 0.5% by mass or more, and more preferably 30% by mass or less. An excessive amount of the powder results in an excessively hard grease and, possibly, sufficient lubricating properties cannot be attained, while an excessively small amount of the powder possibly fails to provide sufficient sealability.

The grease may also contain a solid lubricant, an extreme pressure agent, an antioxidant, an oiliness improver, a rust inhibitor, a viscosity index improver, a detergent-dispersant, and the like.

The powder of the present disclosure can be suitably produced by the production method of the present disclosure. Next, the production method of the present disclosure will now be described in detail.

### 2. Method for producing powder

In the production method of the present disclosure, an aqueous dispersion is prepared, then a relatively large amount of a radical generator is added to the resulting aqueous dispersion, the aqueous dispersion containing the radical generator is subjected to a heat treatment, and low molecular weight polytetrafluoroethylene in the aqueous dispersion subjected to the heat treatment is recovered and dried at a relatively low temperature. The use of such a production method makes it possible to produce a powder containing particles of low molecular weight polytetrafluoroethylene, having excellent fine dispersibility in other materials, and having a reduced content of a fluorine-containing compound having a hydrophilic group.

That is, the use of the production method of the present disclosure makes it possible to produce a powder having a content of a fluorine-containing compound having a hydrophilic group of 250 ppb by mass or less. Moreover, the use of the production method of the present disclosure makes it possible to produce a powder having a specific surface area of 7 to 50 m²/g.

Hereinafter, the steps and the materials used in the steps will now be described in detail.

### (Polymerization of tetrafluoroethylene)

In the production method of the present disclosure, first, tetrafluoroethylene is polymerized in a reactor in the presence of a fluorine-containing surfactant, a polymerization initiator, and an aqueous medium to prepare an aqueous dispersion containing primary particles of low molecular weight polytetrafluoroethylene.

Polymerization of tetrafluoroethylene can be performed by charging a reactor with tetrafluoroethylene, a fluorine-containing surfactant, a polymerization initiator, an aqueous medium, and optionally other additives, stirring the contents of the reactor, retaining the reactor at a predetermined polymerization temperature, and then adding a predetermined amount of a polymerization initiator to initiate the polymerization reaction. After the polymerization reaction is initiated, tetrafluoroethylene, the polymerization initiator, the fluorine-containing surfactant, a chain transfer agent, and the like may be further added depending on the purpose. The method for polymerizing tetrafluoroethylene is not limited, and is preferably an emulsion polymerization method.

The above-described modifying monomer may be polymerized together with tetrafluoroethylene. The amounts of tetrafluoroethylene and the optional modifying monomer used are preferably such that modified polytetrafluoroethylene is obtained that is to be contained in the powder of the present disclosure.

### (Fluorine-containing surfactant)

The fluorine-containing surfactant used in the polymerization of tetrafluoroethylene may be a fluorine-containing surfactant that can be contained in the powder of the present disclosure, and such a fluorine-containing surfactant is preferably used.

The amount of the fluorine-containing surfactant added is preferably 10 ppm by mass to 10% by mass, is more preferably 100 ppm by mass or more and even more preferably 300 ppm by mass or more, and is more preferably 5% by mass or less and even more preferably 1% by mass or less, based on the aqueous medium.

### (Polymerization initiator)

The polymerization initiator used in the polymerization of tetrafluoroethylene is not limited as long as it is a polymerization initiator capable of generating radicals within the polymerization temperature range, and known oil-soluble and/or water-soluble polymerization initiators can be used. Moreover, the polymerization initiator can also be combined with a reducing agent or the like to form a redox agent and initiate polymerization. The concentration of the polymerization initiator is suitably determined according to the type of monomer, the molecular weight of the target low molecular weight polytetrafluoroethylene, and the reaction rate.

The polymerization initiator may be an oil-soluble radical polymerization initiator or a water-soluble radical polymerization initiator.

The oil-soluble radical polymerization initiator may be a known oil-soluble peroxide, and representative examples include dialkyl peroxycarbonates such as diisopropyl peroxydicarbonate and di-sec-butyl peroxydicarbonate; peroxy esters such as t-butyl peroxyisobutyrate and t-butyl peroxypivalate; and dialkyl peroxides such as di-t-butyl peroxide, as well as di[perfluoro (or fluorochloro) acyl]peroxides such as di(ω-hydro-dodecafluoroheptanoyl)peroxide, di(ω-hydro-tetradecafluorooctanoyl)peroxide, di(ω-hydro-hexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluorooctanoyl)peroxide, di(perfluorononanoyl)peroxide, di(ω-chloro-hexafluorobutyryl)peroxide, di(ω-chloro-decafluorohexanoyl)peroxide, di(ω-chloro-tetradecafluorooctanoyl)peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotoriacontafluorodocosanoyl)peroxide.

The water-soluble radical polymerization initiator may be a known water-soluble peroxide, and examples include ammonium salts, potassium salts, and sodium salts of persulphuric acid, perboric acid, perchloric acid, perphosphoric acid, and percarbonic acid, organic peroxides of disuccinic acid peroxide and diglutaric acid peroxide, t-butyl permaleate, and t-butyl hydroperoxide. A reducing agent such as a sulfite may be contained together, and the amount thereof may be 0.1 to 20 times the amount of the peroxide.

For example, when performing the polymerization at a low temperature of 30°C or lower, the polymerization initiator used is preferably a redox initiator obtained by combining an oxidizing agent and a reducing agent. Examples of the oxidizing agent include persulfates, organic peroxides, potassium permanganate, manganese triacetate, and ammonium cerium nitrate. Examples of the reducing agent include sulfites, bisulfites, bromates, diimines, and oxalic acid. Examples of persulfates include ammonium persulfate and potassium persulfate. Examples of sulfites include sodium sulfite and ammonium sulfite. In order to increase the decomposition rate of the initiator, the combination of the redox initiator preferably contains a copper salt or an iron salt. The copper salt may be copper(II) sulfate, and the iron salt may be iron(II) sulfate.

Examples of the redox initiator include potassium permanganate/oxalic acid, potassium permanganate/ammonium oxalate, ammonium persulfate/bisulfite/iron sulfate, manganese triacetate/oxalic acid, cerium ammonium nitrate/oxalic acid, and bromate/bisulfite, and potassium permanganate/oxalic acid is preferable. When using a redox initiator, one of an oxidizing agent or a reducing agent may be introduced into a polymerization tank in advance, and then the other may be added continuously or intermittently to initiate polymerization. For example, when using potassium permanganate/oxalic acid, preferably, a polymerization tank is charged with oxalic acid, and potassium permanganate is continuously added thereto.

The amount of the polymerization initiator added is not limited, and the polymerization initiator is added in an amount that does not significantly decrease the polymerization rate (e.g., a concentration of several ppm in water) or more at once in the initial stage of polymerization, or added successively or continuously. The upper limit is within a range where the reaction temperature is allowed to increase while the polymerization reaction heat is removed through the device surface, and the upper limit is more preferably within a range where the polymerization reaction heat can be removed through the device surface.

By adding a decomposer when polymerizing tetrafluoroethylene, the concentration of radicals during polymerization can be regulated. Examples of the decomposer include sulfites, bisulfites, bromates, diimines, oxalic acid, copper salts, and iron salts. Examples of sulfites include sodium sulfite and ammonium sulfite. The copper salt may be copper(II) sulfate, and the iron salt may be iron(II) sulfate. The amount of the decomposer added is in the range of 25 to 300% by mass based on the amount of the oxidizing agent combined as a polymerization initiator (a redox initiator). The amount of the decomposer added is preferably 25 to 150% by mass, and more preferably 50 to 100% by mass. Further, the decomposer is preferably added after 5% by mass of all tetrafluoroethylene consumed in the polymerization reaction is polymerized, and more preferably after 10% by mass is polymerized. The amount of the decomposer added is preferably an amount corresponding to 0.1 to 20 ppm by mass and more preferably an amount corresponding to 3 to 10 ppm by mass of the mass of the aqueous medium used.

### (Aqueous medium)

The aqueous medium for use in the polymerization of tetrafluoroethylene is a reaction medium in which the polymerization is performed, and means a liquid containing water. The aqueous medium is not limited as long as it contains water, and may be an aqueous medium containing water and, for example, a fluorine-free organic solvent such as ether or ketone, and/or a fluorine-containing organic solvent having a boiling point of 40°C or lower.

The aqueous medium is preferably an aqueous medium solely containing water or an aqueous medium solely containing water and a fluorine-free organic solvent, and is more preferably an aqueous medium solely containing water because the polymerization of tetrafluoroethylene can proceed smoothly and, also, deterioration of the efficiency of removing the fluorine-containing compound having a hydrophilic group can be suppressed.

The moisture content in the aqueous medium is preferably 90% or more, more preferably 95% or more, even more preferably 99.0% or more, yet more preferably 99.5% or more, and particularly preferably 99.9% or more, and may be 100% based on the mass of the aqueous medium because the polymerization of tetrafluoroethylene can proceed smoothly and, also, deterioration of the efficiency of removing the fluorine-containing compound having a hydrophilic group can be suppressed.

### (Chain transfer agent)

In the production method of the present disclosure, tetrafluoroethylene can be polymerized also in the presence of a chain transfer agent. The use of a chain transfer agent enables the polymerization rate and the molecular weight to be regulated. Examples of the chain transfer agent include esters such as dimethyl malonate, diethyl malonate, methyl acetate, ethyl acetate, butyl acetate, and dimethyl succinate, as well as isopentane, methane, ethane, propane, methanol, isopropanol, acetone, various mercaptans, various halogenated hydrocarbons such as carbon tetrachloride, and cyclohexane.

The amount of the chain transfer agent used is usually 1 to 50,000 ppm by mass, and preferably 1 to 20,000 ppm by mass, based on the total amount of tetrafluoroethylene fed. The amount of the chain transfer agent used is preferably an amount such that the chain transfer agent is completely consumed during the polymerization of tetrafluoroethylene and does not remain in the aqueous dispersion containing low molecular weight polytetrafluoroethylene so as not to deteriorate as much as possible the efficiency of removing the fluorine-containing compound having a hydrophilic group. Accordingly, the amount of the chain transfer agent used is more preferably 10,000 ppm by mass or less, even more preferably 5,000 ppm by mass or less, yet more preferably 1,000 ppm by mass or less, particularly preferably 500 ppm by mass or less, and most preferably 200 ppm by mass or less, based on the total amount of tetrafluoroethylene fed.

The chain transfer agent may be added to the reaction vessel at once before the beginning of the polymerization, may be added at once after the beginning of the polymerization, may be added in multiple portions during the polymerization, or may be added continuously during the polymerization.

### (Other additives)

Additives such as buffers, pH adjusters, stabilizing aids, and dispersion stabilizers can be used in the polymerization of tetrafluoroethylene. In the polymerization of tetrafluoroethylene, radical scavengers and decomposers may be added to regulate the polymerization rate and the molecular weight. Also, fluorine-free anionic surfactants, fluorine-free nonionic surfactants, fluorine-free cationic surfactants, and the like may be used in the polymerization of tetrafluoroethylene.

The stabilizing aid is preferably paraffin wax, fluorine-containing oil, a fluorine-containing solvent, silicone oil, or the like. One stabilizing aid may be used singly, or two or more may be used in combination. The stabilizing aid is more preferably paraffin wax. The paraffin wax may be in the form of liquid, semi-solid, or solid at room temperature, and is preferably a saturated hydrocarbon having 12 or more carbon atoms. The paraffin wax usually preferably has a melting point of 40 to 65°C, and more preferably 50 to 65°C.

The amount of the stabilizing aid used is preferably 0.1 to 12% by mass, and more preferably 0.1 to 8% by mass, based on the mass of the aqueous medium used. Desirably, the stabilizing aid is sufficiently hydrophobic so that the stabilizing aid is completely separated from the aqueous dispersion after polymerization, and does not serve as a contaminating component.

### (Polymerization conditions)

Tetrafluoroethylene can be polymerized at normal pressure and temperature. Usually, the polymerization temperature is 5 to 120°C, and the polymerization pressure is 0.05 to 10 MPaG. The polymerization temperature and the polymerization pressure are suitably determined according to the type of monomer, the molecular weight of the target low molecular weight polytetrafluoroethylene, the reaction rate, and the like.

### (Aqueous dispersion obtained by polymerization)

Polymerization of tetrafluoroethylene yields an aqueous dispersion containing primary particles of low molecular weight polytetrafluoroethylene. The content of low molecular weight polytetrafluoroethylene in the aqueous dispersion as polymerized is usually 8 to 50% by mass based on the aqueous dispersion.

The aqueous dispersion obtained by polymerizing tetrafluoroethylene usually contains, other than low molecular weight polytetrafluoroethylene, a fluorine-containing surfactant used when polymerizing tetrafluoroethylene, as a fluorine-containing compound having a hydrophilic group. Also, the aqueous dispersion obtained by polymerizing tetrafluoroethylene may contain, other than low molecular weight polytetrafluoroethylene, a fluorine-containing compound having a hydrophilic group produced by polymerizing the monomer.

A typical fluorine-containing compound having a hydrophilic group in the aqueous dispersion obtained by polymerization is a fluorine-containing compound having a hydrophilic group and having a molecular weight of 1,000 g/mol or less. The production method of the present disclosure makes it possible to eventually produce a powder having a reduced content of the fluorine-containing compound having a hydrophilic group and having a molecular weight of 1,000 g/mol or less.

In one embodiment, the aqueous dispersion obtained by the polymerization contains a fluorine-containing surfactant added during the polymerization as the fluorine-containing compound having a hydrophilic group. The fluorine-containing surfactant added during the polymerization is as described above for the fluorine-containing surfactant used in the polymerization of tetrafluoroethylene.

The content of the fluorine-containing compound having a hydrophilic group in the aqueous dispersion obtained by the polymerization may be 200 ppm by mass or more, 300 ppm by mass or more, or 400 ppm by mass or more, and may be 10% by mass or less, 1% by mass or less, or 0.5% by mass or less, based on the aqueous dispersion.

The content of the fluorine-containing surfactant, used when polymerizing tetrafluoroethylene, in the aqueous dispersion obtained by the polymerization may be 200 ppm by mass or more, 300 ppm by mass or more, or 400 ppm by mass or more, and may be 10% by mass or less, 1% by mass or less, or 0.5% by mass or less, based on the aqueous dispersion.

In one embodiment, the aqueous dispersion obtained by the polymerization contains a compound (I) represented by the following general formula (I) as the fluorine-containing compound having a hydrophilic group:
General formula (I):

F(CF₂)ₙ₁COOM (I)

wherein n1 is an integer of 3 to 13; and M is H, a metal atom, NR⁷₄, optionally substituted imidazolium, optionally substituted pyridinium, or optionally substituted phosphonium, wherein R⁷ is H or an organic group.

When the aqueous dispersion obtained by the polymerization contains at least the compound (I) represented by general formula (I) as the fluorine-containing compound having a hydrophilic group, the content of the compound (I) in the aqueous dispersion obtained by the polymerization may be 200 ppb by mass or more, 300 ppb by mass or more, or 400 ppb by mass or more, and may be 10% by mass or less, 1% by mass or less, or 0.5% by mass or less, based on the aqueous dispersion.

In one embodiment, the aqueous dispersion obtained by the polymerization contains a compound represented by the following general formula (H1) as the fluorine-containing compound having a hydrophilic group:

General formula (H1): [X-Rf-A⁻]ᵢMⁱ⁺

wherein X is H, Cl, Br, F, or I; Rf is a linear or branched, partially fluorinated or fully fluorinated aliphatic group, or a linear or branched, partially fluorinated or fully fluorinated aliphatic group interrupted by at least one oxygen atom; A⁻ is an acid group; Mⁱ⁺ is a cation having a valence of i; and i represents an integer of 1 to 3.

In one embodiment, the aqueous dispersion obtained by the polymerization contains a compound represented by the following general formula (H2) as the fluorine-containing compound having a hydrophilic group:

General formula (H2): [Cₙ₋₁F₂ₙ₋₁COO⁻]M⁺

wherein n is an integer of 9 to 14, and M⁺ represents a cation.

The compound represented by general formula (H2) (perfluoroalkanoic acid) is known to be formed during polymerization when perfluoro(alkyl vinyl ether) or the like is used as a monomer (see International Publication No. WO 2019/161153).

In one embodiment, the aqueous dispersion obtained by the polymerization contains a compound represented by the following general formula (H3) as the fluorine-containing compound having a hydrophilic group:

General formula (H3): [R¹-O-L-CO₂⁻]M⁺

wherein R¹ is a linear or branched, partially fluorinated or fully fluorinated aliphatic group, or a linear or branched, partially fluorinated or fully fluorinated aliphatic group interrupted by at least one oxygen atom; L represents a linear or branched non-fluorinated, partially fluorinated, or fully fluorinated alkylene group; and M⁺ represents a cation.

In one embodiment, the aqueous dispersion obtained by the polymerization contains a compound represented by general formula (H4) as the fluorine-containing compound having a hydrophilic group:

General Formula (H4): H-Rfⁿ⁰-Y⁰

wherein Rfⁿ⁰ is a linear, branched, or cyclic alkylene group having 3 to 20 carbon atoms in which some or all of H are replaced by F, the alkylene group optionally containing one or more ether bonds in which some of H are optionally replaced by Cl; and Y⁰ is an anionic group.

Examples of the compound represented by general formula (H4) include compounds represented by any of the following general formulae:

General formula (H4-1): [H-(CF₂)ₘ₁CO₂⁻]M⁺

wherein m1 is an integer of 3 to 19, and M⁺ represents a cation;

General formula (H4-2): [H-(CF₂)ₘ₂-(CF(CF₃))ₘ₃-CO₂⁻]M⁺

wherein m2 is an integer of 1 to 17, m3 is an integer of 1 to 9, and M⁺ represents a cation, provided that m2 and m3 are selected so as to satisfy 3 ≤ (m2 + 2 × m3) ≤ 19, and the repeating units occur in any order in the formulae.

### (Removal of tetrafluoroethylene or recovery of aqueous dispersion)

In the production method of the present disclosure, after producing the aqueous dispersion by polymerization and before adding a radical generator to the aqueous dispersion, at least one of the following operations can be carried out: (a) removing from the reactor tetrafluoroethylene remaining in the reactor, and (b) recovering the aqueous dispersion in the reactor and accommodating the aqueous dispersion in a container different from the reactor. In particular, a method that removes tetrafluoroethylene from the reactor is preferably used because the subsequent steps can be performed in the same reactor used in the polymerization, and thus productivity of the powder is increased. When a modifying monomer is polymerized together with tetrafluoroethylene, the modifying monomer is also removed from the reactor together with tetrafluoroethylene.

After the aqueous dispersion is prepared, preferably the stirring of the contents of the reactor is terminated, and then tetrafluoroethylene is removed or the aqueous dispersion is recovered, because the subsequent operations become easy, or the polymerization of tetrafluoroethylene can be smoothly terminated.

The method for removing tetrafluoroethylene from the reactor is not limited. After the aqueous dispersion is prepared, tetrafluoroethylene may be removed from the reactor by terminating the stirring of the contents of the reactor if desired and discharging gas until the pressure inside the reactor reaches normal pressure, tetrafluoroethylene may be removed from the reactor by reducing the pressure inside the reactor to lower than 0.0 MPaG, or tetrafluoroethylene in the reactor may be replaced with an inert gas such as nitrogen gas by feeding the inert gas to the reactor. Also, tetrafluoroethylene may be removed from the reactor as a result of reacting the entirety of tetrafluoroethylene in the reactor to convert it to low molecular weight polytetrafluoroethylene. As long as the removal from the reactor of tetrafluoroethylene remaining in the reactor can be performed to such an extent that the polymerization reaction of tetrafluoroethylene is sufficiently terminated, a small amount of residual tetrafluoroethylene may be allowed in the reactor. The removed tetrafluoroethylene can be recovered by a known means. The recovered tetrafluoroethylene may be reused to produce low molecular weight polytetrafluoroethylene.

A preferable method for removing tetrafluoroethylene from the reactor may be a method involving, after the aqueous dispersion is prepared, terminating the stirring of the contents of the reactor if desired, reducing the pressure inside the reactor to lower than 0.0 MPaG, and then feeding an inert gas to the reactor. Reducing the pressure inside the reactor and feeding an inert gas may be repeated multiple times.

When tetrafluoroethylene is polymerized at a temperature higher than normal temperature, the reactor may be cooled before removing tetrafluoroethylene from the reactor or after removing tetrafluoroethylene from the reactor. When tetrafluoroethylene is removed from the reactor by means of, for example, gas discharge or nitrogen purge, an unreacted modifying monomer especially in a liquid form may remain in the reactor, and thus cooling the reactor can sufficiently suppress the reaction of the unreacted modifying monomer from proceeding.

The method for recovering the aqueous dispersion in the reactor and accommodating the aqueous dispersion in a container different from the reactor used in the polymerization is not limited. For example, after the aqueous dispersion is prepared, the stirring of the contents of the reactor may be terminated if desired, the reactor may be opened, and the aqueous dispersion in the reactor may be poured into another container, or after the aqueous dispersion is prepared, the stirring of the contents of the reactor may be terminated if desired, the aqueous dispersion may be fed from the reactor to another container through a pipe that connects the reactor and another container.

To terminate the polymerization reaction of tetrafluoroethylene, a polymerization terminator (a radical scavenger) may be added.

The polymerization terminator may be a compound having no reinitiation ability after addition or chain transfer to a free radical in the polymerization system. Specifically, used is a compound that readily undergoes a chain transfer reaction with a primary radical or a propagating radical and then generates a stable radical that does not react with a monomer or a compound that readily undergoes an addition reaction with a primary radical or a propagating radical to generate a stable radical. The activity of what is commonly referred to as a chain transfer agent is characterized by the chain transfer constant and the reinitiation efficiency, and, among chain transfer agents, those having almost 0% reinitiation efficiency are referred to as polymerization terminators. The polymerization terminator is preferably at least one selected from the group consisting of aromatic hydroxy compounds, aromatic amines, N,N-diethylhydroxylamine, quinone compounds, terpenes, thiocyanates, and cupric chloride (CuCl₂). Examples of aromatic hydroxy compounds include unsubstituted phenols, polyhydric phenols, salicylic acid, m- or p-salicylic acid, gallic acid, and naphthol. Examples of unsubstituted phenols include o-, m-, or p-nitrophenol, o-, m-, or p-aminophenol, and p-nitrosophenol. Examples of polyhydric phenols include catechol, resorcin, hydroquinone, pyrogallol, phloroglucin, and naphthresorcinol. Examples of aromatic amines include o-, m-, or p-phenylenediamine and benzidine. Examples of quinone compounds include hydroquinone, o-, m- or p-benzoquinone, 1,4-naphthoquinone, and alizarin. Examples of thiocyanates include ammonium thiocyanate (NH₄SCN), potassium thiocyanate (KSCN), and sodium thiocyanate (NaSCN). In particular, the polymerization terminator is preferably a quinone compound, and more preferably hydroquinone.

### (Radical generator)

In the production method of the present disclosure, a radical generator is added in an amount of not less than 5 mol times per mole of the fluorine-containing surfactant used in the polymerization to the aqueous dispersion after carrying out at least one of the operations (a) and (b) and before subjecting the aqueous dispersion to heat treatment. Adding a relatively large amount of a radical generator enables the content of the fluorine-containing compound having a hydrophilic group to be sufficiently reduced.

The aqueous dispersion to which the radical generator is added may be the aqueous dispersion remaining in the reactor, or may be the aqueous dispersion recovered from the reactor and accommodated in another container.

The radical generator is not limited as long as it is a compound that can generate radicals by being decomposed at the heat treatment temperature. The radical generator is preferably a water-soluble radical generator because radicals can be easily diffused in the aqueous dispersion.

Examples of the radical generator include organic peroxides, inorganic peroxides, organic azo compounds, and combinations of oxidizing agents and reducing agents, and preferable is at least one selected from the group consisting of inorganic peroxides, organic peroxides, and combinations of oxidizing agents and reducing agents.

The inorganic peroxide is preferably a water-soluble inorganic peroxide. Examples of the inorganic peroxide include hydrogen peroxide, perchlorates, perborates, perphosphates, percarbonates, and persulfates, and a persulfate is preferable. The persulfate is preferably at least one selected from the group consisting of ammonium persulfate, sodium persulfate, and potassium persulfate, and more preferably ammonium persulfate.

The organic peroxide is preferably a water-soluble organic peroxide. Examples of the organic peroxide include peroxydicarbonates such as disuccinic acid peroxide and diglutaric acid peroxide.

The radical generator may be a combination of an oxidizing agent and a reducing agent. The use of a combination of an oxidizing agent and a reducing agent enables radicals to be generated from the radical generator through a redox reaction between the oxidizing agent and the reducing agent, and thus the temperature during heat treatment can be lowered.

Examples of the oxidizing agent include persulfates, organic peroxides, potassium permanganate, manganese triacetate, and ammonium cerium nitrate. Examples of the reducing agent include sulfites, bisulfites, bromates, diimines, and oxalic acid. Examples of persulfates include ammonium persulfate and potassium persulfate. Examples of sulfites include sodium sulfite and ammonium sulfite. In order to increase the decomposition rate of the oxidizing agent, a copper salt or an iron salt is also preferably added. The copper salt may be copper(II) sulfate, and the iron salt may be iron(II) sulfate.

Examples of the combination of an oxidizing agent and a reducing agent include potassium permanganate/oxalic acid, ammonium persulfate/bisulfite/iron sulfate, manganese triacetate/oxalic acid, cerium ammonium nitrate/oxalic acid, and bromate/bisulfite, and potassium permanganate/oxalic acid is preferable. When using a combination of an oxidizing agent and a reducing agent, one of an oxidizing agent and a reducing agent may be added to the aqueous dispersion in advance, and then the other may be added continuously or intermittently.

Because the efficiency of removing the fluorine-containing compound having a hydrophilic group can be further increased, the amount of the radical generator added is preferably not less than 5 mol times, more preferably not less than 8 mol times, and even more preferably not less than 10 mol times, and is preferably not more than 1,000 mol times, more preferably not more than 500 mol times, and even more preferably not more than 100 mol times, per mole of the fluorine-containing surfactant used in the polymerization. The production method of the present disclosure is for producing a powder and, accordingly, adding a relatively large amount of radical generator may cause low molecular weight polytetrafluoroethylene in the aqueous dispersion to precipitate without any adverse effect.

The method for adding the radical generator is not limited. The radical generator may be added as-is to the aqueous dispersion, or a solution containing the radical generator may be prepared and added to the aqueous dispersion. The radical generator may be added while stirring the aqueous dispersion, or the aqueous dispersion may be stirred after adding the radical generator.

The temperature of the aqueous dispersion to which the radical generator is added is not limited, and it may be the temperature of the aqueous dispersion after tetrafluoroethylene is polymerized, may be the temperature reached by cooling the aqueous dispersion after tetrafluoroethylene is polymerized, or may be the temperature of the heat treatment. That is, after the radical generator is added to the aqueous dispersion, the aqueous dispersion may be heated for heat treatment, or after the aqueous dispersion is heated to the temperature for heat treatment, the radical generator may be added to the aqueous dispersion.

### (Heat treatment)

In the production method of the present disclosure, the aqueous dispersion to which a radical generator has been added (the aqueous dispersion containing a radical generator) is subjected to heat treatment. Performing the heat treatment on the aqueous dispersion containing a relatively large amount of a radical generator enables the content of the fluorine-containing compound having a hydrophilic group in the aqueous dispersion to be surprisingly reduced.

The content of low molecular weight polytetrafluoroethylene in the aqueous dispersion may be regulated before the heat treatment. The content of low molecular weight polytetrafluoroethylene can be regulated by a known method such as concentration or dilution.

The content of low molecular weight polytetrafluoroethylene in the aqueous dispersion to be subjected to the heat treatment is preferably 1% by mass or more, more preferably 5% by mass or more, and even more preferably 10% by mass or more based on the mass of the aqueous dispersion because the aqueous dispersion of low molecular weight polytetrafluoroethylene can be produced at high productivity without impairing the efficiency of removing the fluorine-containing compound having a hydrophilic group. The upper limit of low molecular weight polytetrafluoroethylene is preferably 60% by mass or less, more preferably 55% by mass or less, and even more preferably 50% by mass or less.

The content of the fluorine-containing surfactant added during the polymerization in the aqueous dispersion to be subjected to heat treatment is preferably 500 mass ppm or more and more preferably 1,000 mass ppm or more, and is preferably 10% by mass or less, more preferably 5% by mass or less, and even more preferably 1% by mass or less, based on the mass of low molecular weight polytetrafluoroethylene in the aqueous dispersion.

The content of the fluorine-containing compound having a hydrophilic group that is produced by the polymerization of tetrafluoroethylene and that is present in the aqueous dispersion to be subjected to heat treatment is preferably 500 ppb by mass or more and more preferably 1,000 ppb by mass or more, and is preferably 1,0% by mass or less, more preferably 0.1% by mass or less, and even more preferably 0.01% by mass or less, based on the mass of low molecular weight polytetrafluoroethylene.

The content of the fluorine-containing compound having a hydrophilic group in the aqueous dispersion to be subjected to heat treatment (the total amount of the content of the fluorine-containing surfactant added during the polymerization and the content of the fluorine-containing compound having a hydrophilic group produced by the polymerization of the tetrafluoroethylene) is preferably 500 ppb by mass or more and more preferably 1,000 ppb by mass or more, and is preferably 10% by mass or less, more preferably 5% by mass or less, and even more preferably 1% by mass or less, based on the low molecular weight polytetrafluoroethylene in the aqueous dispersion.

The temperature of the heat treatment is preferably 35°C or higher, more preferably 40°C or higher, even more preferably 45°C or higher, and particularly preferably 50°C or higher, and is preferably 120°C or lower, more preferably 110°C or lower, even more preferably 100°C or lower, and particularly preferably 90°C or lower, because the efficiency of removing the fluorine-containing compound having a hydrophilic group can be further increased. When performing the heat treatment on the aqueous dispersion to which a radical generator has been added, the temperature of the heat treatment is preferably equal to or higher than a temperature at which the radical generator degrades and generates a radical (a degradation temperature). The production method of the present disclosure is for producing a powder and, accordingly, performing the heat treatment at a relatively high temperature may cause low molecular weight polytetrafluoroethylene in the aqueous dispersion to precipitate without any adverse effect.

In the heat treatment of the aqueous dispersion, it is not necessarily need to heat the aqueous dispersion as long as the aqueous dispersion can be maintained at a desired temperature or higher. For example, when the temperature of polymerizing tetrafluoroethylene is sufficiently high, and the temperature of the resulting aqueous dispersion is also sufficiently high, the heat treatment can be initiated before the resulting aqueous dispersion is cooled. However, preferably, the aqueous dispersion is cooled before and after removing tetrafluoroethylene from the reactor or recovering the aqueous dispersion in the reactor, then the aqueous dispersion is heated to the above temperature range, and such a temperature is maintained for a certain period of time because the temperature of the heat treatment can be easily controlled. The temperature of the aqueous dispersion to be subjected to heat treatment may be, for example, 30°C or lower.

The means of heating when performing the heat treatment while heating the aqueous dispersion is not limited. For example, a container accommodating the aqueous dispersion may be placed in a constant-temperature vessel and heated, or the aqueous dispersion may be accommodated in a container equipped with a heater, and heated by the heater.

The pressure during heat treatment is not limited, and may be normal pressure. For example, when the temperature during the heat treatment is relatively high, and boiling of the aqueous dispersion needs to be suppressed, the pressure during the heat treatment may exceed normal pressure.

The heat treatment time is preferably 15 minutes or longer, more preferably 30 minutes or longer, and even more preferably 60 minutes or longer, and is preferably 1,200 minutes or shorter, more preferably 900 minutes or shorter, and even more preferably 600 minutes or shorter, because the efficiency of removing the fluorine-containing compound having a hydrophilic group can be further increased.

The heat treatment may be performed while stirring the aqueous dispersion.

### (Preparation of wet powder and drying of wet powder)

In the production method of the present disclosure, low molecular weight polytetrafluoroethylene in the aqueous dispersion subjected to the heat treatment is coagulated to produce a wet powder containing particles of low molecular weight polytetrafluoroethylene, and the wet powder is dried at a temperature not higher than a temperature that is 70°C lower than the melting point of low molecular weight polytetrafluoroethylene to produce a powder containing the particles of low molecular weight polytetrafluoroethylene.

The method for coagulating low molecular weight polytetrafluoroethylene is not limited. For example, the aqueous dispersion is diluted with water so as to have a polymer concentration of 5 to 20% by mass, optionally the pH is regulated to be neutral or alkaline, and then the dispersion is stirred in a vessel equipped with a stirrer more vigorously than the stirring during the polymerization of tetrafluoroethylene. Low molecular weight polytetrafluoroethylene may be coagulated by adding a water-soluble organic compound such as methanol or acetone, an inorganic salt such as potassium nitrate or ammonium carbonate, or an inorganic acid such as hydrochloric acid, sulfuric acid, or nitric acid as a coagulating agent to the aqueous dispersion, and stirring the mixture. After low molecular weight polytetrafluoroethylene is coagulated, a wet powder containing particles of low molecular weight polytetrafluoroethylene can be recovered. The wet powder may contain precipitates of low molecular weight polytetrafluoroethylene precipitated by adding a radical generator, or precipitates of low molecular weight polytetrafluoroethylene precipitated by heat treatment.

Before drying the wet powder, the wet powder may be washed. The wet powder can be washed with water or an organic solvent. Washing may be performed one or more times. Examples of the organic solvent used in washing include ethers, halogenated hydrocarbons, aromatic hydrocarbons, pyridines, nitriles, nitrogen-containing polar organic compounds, dimethyl sulfoxide, and alcohols.

In the production method of the present disclosure, the wet powder is dried at a temperature not higher than a temperature that is 70°C lower than the melting point of low molecular weight polytetrafluoroethylene. By drying the wet powder at a relatively low temperature, a powder having excellent fine dispersibility in other materials can be obtained.

The drying temperature of the wet powder is preferably not higher than a temperature that is 80°C lower than the melting point of low molecular weight polytetrafluoroethylene, and more preferably not higher than a temperature that is 100°C lower than the melting point of low molecular weight polytetrafluoroethylene.

The drying temperature of the wet powder is preferably 250°C or lower, more preferably 230°C or lower, and even more preferably 220°C or lower.

The drying temperature of the wet powder is preferably 100°C or higher, more preferably 120°C or higher, even more preferably 140°C or higher, and yet more preferably 160°C or higher. An excessively low drying temperature results in a long drying time and possibly an impaired productivity.

The resulting powder may be classified or may be granulated. Also, the resulting powder may be pelletized. In the production method of the present disclosure, a powder having excellent fine dispersibility in other materials is directly obtained after drying and, accordingly, it is also a preferable embodiment that no after-treatment is performed on the dried powder.

While embodiments have been described above, it will be understood that various changes in form and detail can be made without departing from the gist and scope of the claims.
<1> According to the first aspect of the present disclosure, provided is
   a powder containing a particle of a low molecular weight polytetrafluoroethylene, wherein
   the powder contains a fluorine-containing compound having a hydrophilic group, and a content of the fluorine-containing compound having a hydrophilic group is 250 ppb by mass or less based on the powder, and wherein
   the powder has a specific surface area of 7 to 50 m²/g.
<2> According to the second aspect of the present disclosure, provided is
   the powder according to the first aspect, wherein the low molecular weight polytetrafluoroethylene has a melting point of 322 to 333°C.
<3> According to the third aspect of the present disclosure, provided is
   the powder according to the first or second aspect,
   wherein the low molecular weight polytetrafluoroethylene has a melt viscosity at 380°C of 1 × 10² to 7 × 10⁵ Pa·s.
<4> According to the fourth aspect of the present disclosure, provided is
   the powder according to any one of the first to third aspects, wherein the low molecular weight polytetrafluoroethylene has carboxyl group, and the number of carboxyl groups is 29 or less per 10⁶ carbon atoms.
<5> According to the fifth aspect of the present disclosure, provided is
   the powder according to any one of the first to fourth aspects, wherein the particles of the low molecular weight polytetrafluoroethylene have an average particle size of 1.0 to 30 µm.
<6> According to the sixth aspect of the present disclosure, provided is
   the powder according to any one of the first to fifth aspects, wherein the fluorine-containing compound having a hydrophilic group is a compound represented by the following general formula (N⁰):

   General formula (N⁰): Xⁿ⁰-Rfⁿ⁰-Y⁰

   wherein Xⁿ⁰ is H, Cl, or F; Rfⁿ⁰ is a linear, branched, or cyclic alkylene group having 3 to 20 carbon atoms in which some or all of H are replaced by F, the alkylene group optionally containing one or more ether bonds in which some of H are optionally replaced by Cl; and Y⁰ is an anionic group.
<7> According to the seventh aspect of the present disclosure, provided is
   the powder according to any one of the first to sixth aspects, wherein the fluorine-containing compound having a hydrophilic group contains at least a compound (I) represented by general formula (I):

   General formula (I): F(CF₂)ₙ₁COOM

   wherein n1 is an integer of 3 to 13; and M is H, a metal atom, NR⁷₄, optionally substituted imidazolium, optionally substituted pyridinium, or optionally substituted phosphonium, wherein R⁷ is H or an organic group.
<8> According to the eighth aspect of the present disclosure, provided is
   the powder according to the seventh aspect, wherein a content of the compound (I) is 25 ppb by mass or less based on the powder.
<9> According to the ninth aspect of the present disclosure, provided is
   the powder according to the seventh aspect, wherein a content of the compound (I) is 5 ppb by mass or less based on the powder.
<10> According to the tenth aspect of the present disclosure, provided is
   a method for producing a powder containing a particle of a low molecular weight polytetrafluoroethylene, the method comprising:
   polymerizing tetrafluoroethylene in a reactor in the presence of a fluorine-containing surfactant, a polymerization initiator, and an aqueous medium to produce an aqueous dispersion containing a primary particle of the low molecular weight polytetrafluoroethylene;
   after the aqueous dispersion is produced, carrying out at least one of the operations of removing from the reactor tetrafluoroethylene remaining in the reactor, and recovering the aqueous dispersion in the reactor and accommodating the aqueous dispersion in a container different from the reactor;
   adding to the aqueous dispersion a radical generator in an amount of not less than 5 mol times per mole of the fluorine-containing surfactant used in the polymerization;
   subjecting to a heat treatment the aqueous dispersion containing the radical generator;
   coagulating the low molecular weight polytetrafluoroethylene in the aqueous dispersion subjected to the heat treatment to produce a wet powder containing the particle of the low molecular weight polytetrafluoroethylene; and
   drying the wet powder at a temperature not higher than a temperature that is 70°C lower than the melting point of the low molecular weight polytetrafluoroethylene to produce the powder.

### EXAMPLES

Next, embodiments of the present disclosure will now be described by way of Examples, but the present disclosure is not limited only to the Examples.

The numerical values in the Examples were measured by the following methods.

### <Content of fluorine-containing compound having hydrophilic group>

The content of the fluorine-containing compound having a hydrophilic group contained in the powder was determined in terms of the content of the fluorine-containing compound having a hydrophilic group extracted from the powder.

### 0. Extraction of fluorine-containing compounds having hydrophilic group from powder

First, 10 g (12.6 mL) of methanol was added to 1 g of the powder, and the mixture was subjected to ultrasonication at 60°C for 2 hours. After the mixture was left to stand at room temperature, solid matter was removed to give an extract.

### <Content of compound represented by general formula (I)>

The content of the compound represented by general formula (I) was determined from the calibration curve of a linear perfluorocarboxylic acid having the same number of carbon atoms.

### 1. Calibration curve of linear perfluorocarboxylic acid

Methanol standard solutions of perfluorobutanoic acid, perfluoropentanoic acid, perfluorohexanoic acid, perfluoroheptanoic acid, perfluorooctanoic acid, perfluorononanoic acid, perfluorodecanoic acid, perfluoroundecanoic acid, perfluorododecanoic acid, perfluorotridecanoic acid, and perfluorotetradecanoic acid each having five known concentration levels were prepared, and measurement was made using a liquid chromatograph-mass spectrometer (Agilent, Ultivo Triple Quadrupole LC-MS). First- order approximation was used to create calibration curves from the concentrations of the methanol standard solutions and peak integral values thereof at respective concentration ranges.

### Measuring instrument configuration and LC-MS measurement conditions

### [Table 1]

**Table 1 Measuring instrument configuration and LC-MS measurement conditions**

| LC unit | | | | |
|---|---|---|---|---|
| | Device | 1290 Infinity II manufactured by Agilent Technologies | | |
| | Column | Zorbax RRHD Extend-C18 1.8 µm (2.1 × 50 mm) manufactured by Agilent Technologies | | |
| | Mobile phase | A CH₃CN | | |
| | | B 20 mM CH₃COONH₄/H₂O | | |
| | | | 0 → 1 min | A:B = 10:90 |
| | | | 1 → 6 min | A:B = 10:90 → A:B = 95:5 Linear gradient |
| | | | 6 → 12 min | A:B = 95:5 |
| | Flow rate | 0.3 ml/min | | |
| | Column temperature | 40°C | | |
| | Sample injection volume | 1 µL | | |

| MS unit | | | | |
|---|---|---|---|---|
| | Device | Ultivo LC/TQ manufactured by Agilent Technologies | | |
| | Measurement mode | MRM (Multiple Reaction Monitoring) | | |
| | Ionization method | Electrospray ionization | | |
| | | Negative mode | | |

### MRM measurement parameters

### [Table 2]

**Table 2 MRM measurement parameters**

| Compound | Number of carbon atoms | Precursor | Product |
|---|---|---|---|
| Perfluorobutanoic acid | 4 | 213 | 169 |
| Perfluoropentanoic acid | 5 | 263 | 219 |
| Perfluorohexanoic acid | 6 | 313 | 269 |
| Perfluoroheptanoic acid | 7 | 363 | 319 |
| Perfluorooctanoic acid | 8 | 413 | 369 |
| Perfluorononanoic acid | 9 | 463 | 419 |
| Perfluorodecanoic acid | 10 | 513 | 469 |
| Perfluoroundecanoic acid | 11 | 563 | 519 |
| Perfluorododecanoic acid | 12 | 613 | 569 |
| Perfluorotridecanoic acid | 13 | 663 | 619 |
| Perfluorotetradecanoic acid | 14 | 713 | 669 |

### 2. Content of compound represented by general formula (I) contained in powder

The content of the compound represented by general formula (I), having the number of carbon atoms (n1 + 1), and contained in the extract was measured from a calibration curve using a liquid chromatograph-mass spectrometer. The content of the compound represented by general formula (I), having the number of carbon atoms (n1 + 1), and contained in the powder was determined using the following relational expression (2):

Yn = Xn × 12.6 (2)

Yn: Content (ppb by mass/powder) of compound represented by general formula (I), having the number of carbon atoms (n1 + 1), and contained in powder
Xn: Content (ng/mL) of compound represented by general formula (I), having the number of carbon atoms (n1 + 1), and contained in extract

The lower quantification limit of the content of the compound represented by general formula (I), having the number of carbon atoms (n1 + 1), and contained in the powder was 1 ppb by mass/powder.

### MRM measurement parameters

### [Table 3]

**Table 3 MRM measurement parameters**

| Compound | Number of carbon atoms | Precursor | Product |
|---|---|---|---|
| [C₃F₇COO⁻]M⁺ | 4 | 213 | 169 |
| [C₄F₉COO⁻]M⁺ | 5 | 263 | 219 |
| [C₅F₁₁COO⁻]M⁺ | 6 | 313 | 269 |
| [C₆F₁₃COO⁻]M⁺ | 7 | 363 | 319 |
| [C₇F₁₅COO⁻]M⁺ | 8 | 413 | 369 |
| [C₈F₁₇COO⁻]M⁺ | 9 | 463 | 419 |
| [C₉F₁₉COO⁻]M⁺ | 10 | 513 | 469 |
| [C₁₀F₂₁COO⁻]M⁺ | 11 | 563 | 519 |
| [C₁₁F₂₃COO⁻]M⁺ | 12 | 613 | 569 |
| [C₁₂F₂₅COO⁻]M⁺ | 13 | 663 | 619 |
| [C₁₃F₂₇COO⁻]M⁺ | 14 | 713 | 669 |

### <Measurement of compound represented by formula (H4-1)>

The content of the compound represented by formula (H4-1) was determined in terms of perfluorooctanoic acid.

### 1. Calibration curve of compound represented by formula (H4-1)

Methanol standard solutions of perfluorooctanoic acid having five known concentration levels were prepared, and measurement was made using a liquid chromatograph-mass spectrometer (Agilent, Ultivo Triple Quadrupole LC-MS). First- order approximation was used to create calibration curves from the concentrations of the methanol standard solutions and peak integral values thereof at respective concentration ranges.

### Measuring instrument configuration and LC-MS measurement conditions

### [Table 4]

**Table 4 Measuring instrument configuration and LC-MS measurement conditions**

| LC unit | | | | |
|---|---|---|---|---|
| | Device | 1290 Infinity II manufactured by Agilent Technologies | | |
| | Column | Zorbax RRHD Extend-C18 1.8 µm (2.1 × 50 mm) manufactured by Agilent Technologies | | |
| | Mobile phase | A CH₃CN | | |
| | | B 20 mM CH₃COONH₄/H₂O | | |
| | | | 0 → 1 min | A:B = 10:90 |
| | | | 1 → 6 min | A:B = 10:90 → A:B = 95:5 Linear gradient |
| | | | 6 → 12 min | A:B = 95:5 |
| | Flow rate | 0.3 ml/min | | |
| | Column temperature | 40°C | | |
| | Sample injection volume | 1 µL | | |

| MS unit | | | | |
|---|---|---|---|---|
| | Device | Ultivo LC/TQ manufactured by Agilent Technologies | | |
| | Measurement mode | MRM (Multiple Reaction Monitoring) | | |
| | Ionization method | Electrospray ionization | | |
| | | Negative mode | | |

### MRM measurement parameters

### [Table 5]

**Table 5 MRM measurement parameters**

| Compound | Number of carbon atoms | Precursor | Product |
|---|---|---|---|
| Perfluorooctanoic acid | 8 | 413 | 369 |

### 2. Content of compound represented by general formula (H4-1) contained in powder

The content of the compound represented by general formula (H4-1), having the number of carbon atoms (m1 + 1), and contained in the extract was measured from a calibration curve using a liquid chromatograph-mass spectrometer.

The content of the compound represented by general formula (H4-1), having the number of carbon atoms (m1 + 1), and contained in the powder was determined using the following relational expression (5):

Ym = Xm × 12.6 (5)

Ym: Content (ppb by mass/powder) of compound represented by general formula (H4-1), having the number of carbon atoms (m1 + 1) and contained in powder
Xm: Content (ng/mL) of compound represented by general formula (H4-1), having the number of carbon atoms (m1 + 1) and contained in extract

The lower quantification limit of the content of the compound represented by general formula (H4-1), having the number of carbon atoms (m1 + 1), and contained in the powder was 1 ppb by mass/powder.

### MRM measurement parameters

### [Table 6]

**Table 6 MRM measurement parameters**

| Compound | Number of carbon atoms | Precursor | Product |
|---|---|---|---|
| [H-(CF₂)₃CO₂⁻]M⁺ | 4 | 195 | 131 |
| [H-(CF₂)₄CO₂⁻]M⁺ | 5 | 245 | 181 |
| [H-(CF₂)₅CO₂⁻]M⁺ | 6 | 295 | 231 |
| [H-(CF₂)₆CO₂⁻]M⁺ | 7 | 345 | 281 |
| [H-(CF₂)₇CO₂⁻]M⁺ | 8 | 395 | 331 |
| [H-(CF₂)₈CO₂⁻]M⁺ | 9 | 445 | 381 |
| [H-(CF₂)₉CO₂⁻]M⁺ | 10 | 495 | 431 |
| [H-(CF₂)₁₀CO₂⁻]M⁺ | 11 | 545 | 481 |
| [H-(CF₂)₁₁CO₂⁻]M⁺ | 12 | 595 | 531 |
| [H-(CF₂)₁₂CO₂⁻]M⁺ | 13 | 645 | 581 |
| [H-(CF₂)₁₃CO₂⁻]M⁺ | 14 | 695 | 631 |
| [H-(CF₂)₁₄CO₂⁻]M⁺ | 15 | 745 | 681 |
| [H-(CF₂)₁₅CO₂⁻]M⁺ | 16 | 795 | 731 |
| [H-(CF₂)₁₆CO₂⁻]M⁺ | 17 | 845 | 781 |
| [H-(CF₂)₁₇CO₂⁻]M⁺ | 18 | 895 | 831 |
| [H-(CF₂)₁₈CO₂⁻]M⁺ | 19 | 945 | 881 |
| [H-(CF₂)₁₉CO₂⁻]M⁺ | 20 | 995 | 931 |

### <Solid concentration>

The solid concentration was determined according to the equation: P = Z / X × 100 (% by mass) based on the heating residue (Z g) obtained by placing about 1 g (Xg) of a sample in an aluminum cup having a diameter of 5 cm, heating it at 110°C for 30 minutes, and further heating it at 300°C for 30 minutes.

### <Specific surface area>

The specific surface area was measured by BET method with a surface analyzer (product name: MONOSORB, manufactured by QUANTA CHROME INSTRUMENTS). A mixed gas of 30% nitrogen and 70% helium was used as a carrier gas, and liquid nitrogen was used for cooling.

### <Melting point>

Using a differential scanning calorimeter RDC220 (DSC) manufactured by SII Nano Technology Inc., a temperature calibration was performed in advance using indium and lead as standard samples, then about 3 mg of a powder of low molecular weight PTFE was placed in an aluminum pan (a crimp-top vessel), the temperature was raised at 10°C/min in a temperature range of 250 to 380°C in air flowing at 200 ml/min, and the minimum point of the heat of fusion in the above range was regarded as the melting point.

### <Melt viscosity>

Melt viscosity was measured while maintaining 2 g of a sample, which was heated for 5 minutes at a measurement temperature (380°C) in advance, at that temperature under a load of 0.7 MPa in accordance with ASTM D 1238 using a flow tester (manufactured by Shimadzu Corporation) and a 2φ-8L die.

### <Number of carboxyl groups>

In accordance with the method for analyzing terminal groups described in Japanese Patent Laid-Open No. 4-20507, the following measurement was made.

A powder of low molecular weight PTFE was preliminary formed by hand-pressing into a film having a thickness of about 0.1 mm. The formed film was subjected to infrared absorption spectroscopy. PTFE having the terminal completely fluorinated that was produced by bringing PTFE into contact with fluorine gas was also subjected to infrared absorption spectroscopy, and the number of terminal carboxyl groups was calculated from the difference spectrum between the PTFE samples using the following expression: Number of terminal carboxyl groups (per 106 carbon atoms) = (l × K)/t
- I:: Absorbance
- K:: Correction factor
- t:: Thickness of film (mm)

The absorption frequency of the carboxyl group is 3,560 cm⁻¹, and the correction factor is 440.

### <Average particle size>

The particle size distribution was measured using a laser diffraction particle size distribution analyzer (manufactured by JEOL Ltd.) at a pressure of 0.1 MPa for a measurement time of 3 seconds without using a cascade, and a value corresponding to 50% of the resulting cumulative particle size distribution was regarded as the average particle size.

### Production Example 1

The TFE polymerization reaction was performed in the same manner as Example 7 of International Publication No. WO 2009/020187 except that the amount of ammonium perfluorohexanoate charged was changed from 1.7 g to 2.0 g, and the reaction was terminated. Then, the reactor was evacuated until reaching atmospheric pressure, and the contents were removed from the reactor to give an aqueous dispersion of low molecular weight PTFE. The solid concentration of the aqueous dispersion was 20.4% by mass.

### Comparative Example 1

Nitric acid was added to the aqueous dispersion of low molecular weight PTFE obtained in Production Example 1, the mixture was coagulated by intense mechanical shearing force, and the resulting wet powder was dried for 18 hours in a hot air circulation dryer at 160°C to give a powder of low molecular weight PTFE. The resulting powder of low molecular weight PTFE had a melt viscosity of 1.6 × 10⁴ Pa·s, a melting point of 329°C, a specific surface area of 11.1 m²/g, and an average particle size of 4.3 µm.

### Example 1

The aqueous dispersion of low molecular weight PTFE obtained in Production Example 1 was placed in a different reactor, the contents of the reactor were heated to 80°C, and 13.8 g of ammonium persulfate (10 mol times per mole of the fluorine-containing surfactant used in the polymerization) was added as a radical generator. Thereafter, the mixture was retained at 80°C for 3 hours to give a heat-treated aqueous dispersion of low molecular weight PTFE. Nitric acid was added to the resulting heat-treated aqueous dispersion of low molecular weight PTFE, the mixture was coagulated by intense mechanical shearing force, and the resulting wet powder was dried for 18 hours in a hot air circulation dryer at 160°C to give a powder of low molecular weight PTFE. The resulting powder of low molecular weight PTFE had a melt viscosity of 1.6 × 10⁴ Pa·s, a melting point of 329°C, a specific surface area of 11.0 m²/g, an average particle size of 4.2 µm, and 12 carboxyl groups per 10⁶ carbon atoms.

The contents of the compounds represented by general formula (I): F(CF₂)ₙ₁COOM and general formula (H4-1): [H-(CF₂)ₘ₁CO₂⁻]M⁺ contained in the resulting powder are shown in Table 7 and Table 8.

### Production Example 2

A stainless steel autoclave having an inner volume of 6 L and equipped with a stainless steel, anchor-type stirring blade and a temperature-regulating jacket was charged with 3.6 L of deionized water and 7.2 g of ammonium perfluorohexanoate as a fluorine-based surfactant, and hermetically closed. Oxygen was removed from the system by repeatedly injecting nitrogen gas and degassing it several times, and then 820 mg of ethane was injected as a chain transfer agent using tetrafluoroethylene [TFE]. The temperature inside the vessel was raised while stirring, and when the temperature inside the vessel reached 70°C, TFE was again injected.

An aqueous solution obtained by dissolving 460 mg of ammonium persulfate (APS) in 20 ml of deionized water was injected as a polymerization initiator into the vessel using TFE such that the pressure inside the vessel was 0.74 MPa. The pressure inside the vessel decreased due to the decomposition of the polymerization initiator, and thus TFE was continuously fed to maintain the pressure inside the vessel at 0.74 MPa. The temperature inside the vessel was constantly regulated to be 70°C during the reaction. When the amount of TFE consumed reached 1,100 g, stirring was stopped, the pressure inside the vessel was released until reaching normal pressure, and the gas phase was then nitrogen-purged to give an aqueous dispersion of low molecular weight PTFE.

### Example 2

The aqueous dispersion of low molecular weight PTFE obtained in Production Example 2 was placed in a different reactor, the contents of the reactor were heated to 80°C, and 29.7 g of ammonium persulfate (6 mol times per mole of the fluorine-containing surfactant used in the polymerization) was added as a radical generator. Thereafter, the mixture was retained at 80°C for 3 hours to give a heat-treated aqueous dispersion of low molecular weight PTFE. Nitric acid was added to the resulting heat-treated aqueous dispersion of low molecular weight PTFE, the mixture was coagulated by intense mechanical shearing force, and the resulting wet powder was dried for 18 hours in a hot air circulation dryer at 160°C to give a powder of low molecular weight PTFE. The resulting powder of low molecular weight PTFE had a melt viscosity of 4.9 × 10³ Pa·s, a melting point of 328°C, a specific surface area of 19.0 m²/g, an average particle size of 5.2 µm, and 24 carboxyl groups per 10⁶ carbon atoms.

### [Table 7]

**Table 7**

| n1 | Comparative Example 1 | Example 1 | Example 2 |
|---|---|---|---|
| 3 | <1 | <1 | <1 |
| 4 | <1 | <1 | <1 |
| 5 | 2 | <1 | <1 |
| 6 | <1 | <1 | <1 |
| 7 | <1 | <1 | <1 |
| 8 | <1 | <1 | <1 |
| 9 | <1 | <1 | <1 |
| 10 | <1 | <1 | <1 |
| 11 | <1 | <1 | <1 |
| 12 | <1 | <1 | <1 |
| 13 | <1 | <1 | <1 |

| | | | |
|---|---|---|---|
| Unit: ppb by mass/powder | | | |

### [Table 8]

**Table 8**

| m1 | Comparative Example 1 | Example 1 | Example 2 |
|---|---|---|---|
| 9 | 2 | 1 | <1 |
| 11 | 1 | <1 | <1 |
| 13 | 5 | <1 | <1 |
| 15 | 75 | <1 | <1 |
| 17 | 230 | <1 | <1 |

| | | | |
|---|---|---|---|
| Unit: ppb by mass/powder | | | |

## Claims

1. A powder containing a particle of a low molecular weight polytetrafluoroethylene, wherein
the powder contains a fluorine-containing compound having a hydrophilic group, and a content of the fluorine-containing compound having a hydrophilic group is 250 ppb by mass or less based on the powder, and wherein
the powder has a specific surface area of 7 to 50 m²/g.

2. The powder according to claim 1, wherein the low molecular weight polytetrafluoroethylene has a melting point of 322 to 333°C.

3. The powder according to claim 1 or 2, wherein the low molecular weight polytetrafluoroethylene has a melt viscosity at 380°C of 1 × 10² to 7 × 10⁵ Pa·s.

4. The powder according to any one of claims 1 to 3, wherein the low molecular weight polytetrafluoroethylene has carboxyl group, and the number of carboxyl groups is 29 or less per 10⁶ carbon atoms.

5. The powder according to any one of claims 1 to 4, wherein the particles of the low molecular weight polytetrafluoroethylene have an average particle size of 1.0 to 30 µm.

6. The powder according to any one of claims 1 to 5, wherein the fluorine-containing compound having a hydrophilic group is a compound represented by the following general formula (N⁰):
General formula (N⁰): Xⁿ⁰-Rfⁿ⁰-Y⁰
wherein Xⁿ⁰ is H, Cl, or F; Rfⁿ⁰ is a linear, branched, or cyclic alkylene group having 3 to 20 carbon atoms in which some or all of H are replaced by F, the alkylene group optionally containing one or more ether bonds in which some of H are optionally replaced by Cl; and Y⁰ is an anionic group.

7. The powder according to any one of claims 1 to 6, wherein the fluorine-containing compound having a hydrophilic group contains at least a compound (I) represented by general formula (I):
General formula (I): F(CF₂)ₙ₁COOM
wherein n1 is an integer of 3 to 13; and M is H, a metal atom, NR⁷₄, optionally substituted imidazolium, optionally substituted pyridinium, or optionally substituted phosphonium, wherein R⁷ is H or an organic group.

8. The powder according to claim 7, wherein a content of the compound (I) is 25 ppb by mass or less based on the powder.

9. The powder according to claim 7, wherein a content of the compound (I) is 5 ppb by mass or less based on the powder.

10. A method for producing a powder containing a particle of a low molecular weight polytetrafluoroethylene, the method comprising:
polymerizing tetrafluoroethylene in a reactor in the presence of a fluorine-containing surfactant, a polymerization initiator, and an aqueous medium to produce an aqueous dispersion containing a primary particle of the low molecular weight polytetrafluoroethylene;
after the aqueous dispersion is produced, carrying out at least one of the operations of removing from the reactor tetrafluoroethylene remaining in the reactor, and recovering the aqueous dispersion in the reactor and accommodating the aqueous dispersion in a container different from the reactor;
adding to the aqueous dispersion a radical generator in an amount of not less than 5 mol times per mole of the fluorine-containing surfactant used in the polymerization;
subjecting to a heat treatment the aqueous dispersion containing the radical generator;
coagulating the low molecular weight polytetrafluoroethylene in the aqueous dispersion subjected to the heat treatment to produce a wet powder containing the particle of the low molecular weight polytetrafluoroethylene; and
drying the wet powder at a temperature not higher than a temperature that is 70°C lower than the melting point of the low molecular weight polytetrafluoroethylene to produce the powder.
